(19) 

Europäisches
Patentamt
European
Patent Office
Office européen
des brevets

(11) **EP 4 785 805 A1**

(12) **EUROPEAN PATENT APPLICATION**
published in accordance with Art. 153(4) EPC

(43) Date of publication:
05.08.2026 Bulletin 2026/32

(21) Application number: 24871758.9

(22) Date of filing: 03.09.2024

(51) International Patent Classification (IPC):
$A23J\ 3/00^{(2006.01)}$ $A23J\ 3/14^{(2006.01)}$
$A23J\ 3/16^{(2006.01)}$ $A23J\ 3/18^{(2006.01)}$
$A23J\ 3/26^{(2006.01)}$ $A23L\ 13/00^{(2016.01)}$

(52) Cooperative Patent Classification (CPC):
A23J 3/00; A23J 3/14; A23J 3/16; A23J 3/18;
A23J 3/26; A23L 13/00

(86) International application number:
PCT/JP2024/031595

(87) International publication number:
WO 2025/069958 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023170514

(71) Applicant: FUJIFILM Corporation
Tokyo 106-8620 (JP)

(72) Inventors:
• KAMINAGA, Kuniyuki
Ashigarakami-gun, Kanagawa 258-8577 (JP)

• MOCHIZUKI, Yusuke
Ashigarakami-gun, Kanagawa 258-8577 (JP)
• AONO, Naruhiko
Ashigarakami-gun, Kanagawa 258-8577 (JP)
• YAMAMOTO, Kenichi
Ashigarakami-gun, Kanagawa 258-8577 (JP)
• KAMIDE, Yoshiyuki
Ashigarakami-gun, Kanagawa 258-8577 (JP)

(74) Representative: HGF
HGF Limited
4th Floor, 1 City Square
Leeds LS1 2ES (GB)

(54) **MOLDED MEAT ALTERNATIVE**

(57) An alternative restructured meat contains a protein food material that has a fibrous region in at least a part of the protein food material, in which the protein food material has an average value of ratios of a length of a major axis to a length of a minor axis of a void present in a cross section parallel to a fiber direction of 2 or more, and satisfies both of the following (1) and (2) in a multiple accumulated bite measurement.

$$\text{Pliability} < 2.94 \ ... \ (1)$$

$$\text{Brittleness} > 1.06 \ ... \ (2)$$

EP 4 785 805 A1

**Description**

BACKGROUND OF THE INVENTION

1. Field of the Invention

The present disclosure relates to an alternative restructured meat.

2. Description of the Related Art

Livestock meat is a food material which is largely consumed all over the world. However, from the viewpoint of health maintenance, attempts have been made to reduce intake of livestock meat and to consume a livestock meat substitute prepared from a plant-derived vegetable protein such as soybean. Accordingly, various processing techniques for obtaining the meat substitute using a protein raw material as a substitute for the livestock meat have been proposed.

For example, JP1985-221041A (JP-S60-221041A) proposes obtaining a fibrous protein material from a protein-containing mixture containing oilseed protein, wheat gluten, and water, using an extruder having a biaxial screw. JP1989-23856A (JP-S64-23856A) proposes obtaining a protein food material having a dense tissue by cooling a mouthpiece provided at a distal end of an extruder having a biaxial screw for extruding the above-described protein-containing mixture.

SUMMARY OF THE INVENTION

There is a tendency for the meat substitute to be required to have both a fibrous texture (meatiness) that imitates the livestock meat and a bite-off sensation and a chewy texture similar to eating heated livestock meat. This tendency is particularly required in the alternative restructured meat which is one aspect thereof.

Here, in the present disclosure, the meat substitute having the "fibrous texture that imitates the livestock meat" means that a fibrous texture as a cross section cut in parallel to a muscle fiber direction of a muscle tissue of the livestock meat is observed in a case where a cross section of a target meat substitute is observed.

In the present disclosure, the meat substitute having the "bite-off sensation and the chewy texture" means that, in a case where the target meat substitute is chewed, an elasticity and an ease of bite-off similar to that perceived in a case of chewing the heated livestock meat are perceived.

The present disclosure has been made in view of such circumstances, and an object to be achieved by one embodiment of the present disclosure is to provide an alternative restructured meat having a fibrous texture that imitates livestock meat and a bite-off sensation and a chewy texture that imitate the livestock meat.

The present disclosure includes the following embodiments.

[1] An alternative restructured comprising:

a protein food material that has a fibrous region in at least a part of the protein food material,
in which the protein food material has an average value of ratios of a length of a major axis to a length of a minor axis of a void present in a cross section parallel to a fiber direction of 2 or more, and satisfies both of the following (1) and (2) in a multiple accumulated bite measurement.

$$\text{Pliability} < 2.94 \ ... \ (1)$$

$$\text{Brittleness} > 1.06 \ ... \ (2)$$

[2] The alternative restructured meat according to [1], in which the protein food material has a porous structure.
[3] The alternative restructured meat according to [1] or [2], in which the alternative restructured meat contains the protein food material in which, in a cross section of the protein food material that is parallel to a direction orthogonal to the fiber direction, a proportion of the number of voids having a cross-sectional area of 0.1 mm$^2$ or less to a total number of voids present in the cross section is 45% or more.
[4] The alternative restructured meat according to any one of [1] to [3], in which the protein food material further satisfies the following (3) in the multiple accumulated bite measurement.

$$2000 < \text{Tenderness [gw/cm}^2\text{]/thickness [mm] of measurement sample} < 7500 \ ... \ (3)$$

[5] The alternative restructured meat according to any one of [1] to [4], in which the protein food material further satisfies the following (4) in the multiple accumulated bite measurement.

$$375 < \text{Toughness [gw·cm/cm}^2]/\text{thickness [mm] of measurement sample} < 2000 \ ... \ (4)$$

[6] The alternative restructured meat according to any one of [1] to [5], in which the protein food material contains a vegetable protein.

[7] The alternative restructured meat according to any one of [1] to [6], in which the protein food material is aligned in a predetermined direction.

[8] The alternative restructured meat according to [6] or [7], in which the vegetable protein includes at least one selected from the group consisting of defatted soybean protein and wheat gluten.

[9] The alternative restructured meat according to [8], in which the alternative restructured meat contains the protein food material in which a mass ratio of a content of the defatted soybean protein to a content of the wheat gluten is 1.5 to 4.

[10] The alternative restructured meat according to any one of [1] to [9], in which the protein food material further includes a colorant.

[11] The alternative restructured meat according to any one of [1] to [10], further comprising: a binder.

[12] The alternative restructured meat according to [11], in which the binder includes polysaccharides.

[13] The alternative restructured meat according to any one of [1] to [12], further comprising: a fat-mimicking composition.

[14] The alternative restructured meat according to [13], in which the fat-mimicking composition contains granular bodies that contain oil and/or fat having a melting point of 0.1°C or higher, and an edible and ionically cross-linkable polymer that is cross-linked with a cation, and an average particle diameter of the granular bodies is 50 $\mu$m or more and 500 $\mu$m or less.

According to one embodiment of the present disclosure, it is possible to provide the alternative restructured meat having the fibrous texture that imitates the livestock meat and the bite-off sensation and the chewy texture that imitate the livestock meat.

BRIEF DESCRIPTION OF THE DRAWINGS

FIG. 1 is a graph for describing a stress curve obtained by a multiple accumulated bite measurement.
FIG. 2 is a schematic cross-sectional view showing an example of a biaxial extruder.
FIG. 3 is a graph in which Pliability acquired in each of Examples and Comparative Examples is plotted on a horizontal axis and Brittleness is plotted on a vertical axis.

DESCRIPTION OF THE PREFERRED EMBODIMENTS

Hereinafter, an embodiment which is an example according to the present disclosure will be described. These descriptions and examples are only illustrative of the embodiments and do not limit the scope of the invention.

In numerical ranges described in stages in the present specification, an upper limit value or a lower limit value described in one numerical range may be replaced with an upper limit value or a lower limit value of a numerical range described in another stage. In addition, in the numerical ranges described in the present specification, the upper limit value or the lower limit value of the numerical ranges may be replaced with the values shown in examples.

Each component may contain a plurality of kinds of substances corresponding thereto.

In a case where the amount of each component in a composition is referred to, and in a case where a plurality of substances corresponding to each component in the composition are present, it means the total amount of a plurality of substances present in the composition, unless otherwise specified.

"Step" includes not only an independent step but also a step that cannot be clearly distinguished from other steps, as long as the desired action of the step is achieved.

In the present specification, a combination of two or more preferred aspects is a more preferred aspect.

<Alternative restructured meat>

The alternative restructured meat according to the present disclosure contains a protein food material that has a fibrous region in at least a part of the protein food material, in which the protein food material has an average value of ratios of a length of a major axis to a length of a minor axis of a void present in a cross section parallel to a fiber direction of 2 or more, and satisfies both of the following (1) and (2) in a multiple accumulated bite measurement.

$$\text{Pliability} < 2.94 \ ... \ (1)$$

$$\text{Brittleness} > 1.06 \ ... \ (2)$$

The alternative restructured meat according to the present disclosure has the fibrous texture that imitates the livestock meat and the bite-off sensation and the chewy texture that imitate the livestock meat. The reason is presumed as follows.

There is a tendency for the alternative restructured meat to be required to have both a fibrous texture that imitates the livestock meat and a bite-off sensation and a chewy texture similar to eating heated livestock meat.

In response to the above-described requirements, the present inventors have focused on the alternative restructured meat containing a protein food material that has a fibrous region in at least a part of the protein food material, a length of a major axis and a length of a minor axis of a void in a cross section of the protein food material, and mechanical properties exhibited by the protein food material. The present inventors have found that the fact that the average value of the ratios of the length of the major axis to the length of the minor axis of the void present in the cross section parallel to the fiber direction of the protein food material (hereinafter, also referred to as "aspect ratio of void") and Pliability and Brittleness in the multiple accumulated bite measurement are in a predetermined range contributes to the fibrous texture that imitates livestock meat and the bite-off sensation and the chewy texture that imitate livestock meat.

Based on the above-described findings, the alternative restructured meat according to the present disclosure contains a protein food material that has a fibrous region in at least a part of the protein food material, in which the protein food material has an average value of ratios of a length of a major axis to a length of a minor axis of a void present in a cross section parallel to a fiber direction of 2 or more, and satisfies both of the above (1) and (2) in a multiple accumulated bite measurement, whereby the alternative restructured meat has a fibrous texture that imitates livestock meat and a bite-off sensation and a chewy texture that imitate livestock meat.

More specifically, it is presumed that the alternative restructured meat according to the present disclosure contains a protein food material having excellent workability (specifically, ease of tearing) as a cause of the aspect ratio of the void being 2 or more and specific mechanical properties satisfying the above-described (1) and (2), whereby the alternative restructured meat realizes a fibrous texture that imitates livestock meat and a bite-off sensation and a chewy texture that imitate livestock meat.

On the other hand, the related art including the technology described in JP1985-221041A (JP-S60-221041A) and JP1989-23856A (JP-S64-23856A) does not focus on matters corresponding to the aspect ratio of the void and the mechanical properties in the protein food material having a fibrous region in at least a part of the protein food material.

Hereinafter, the alternative restructured meat according to the present disclosure will be described in detail.

The alternative restructured meat according to the present disclosure contains a protein food material (hereinafter, also simply referred to as a "protein food material") having a fibrous region in at least a part of the protein food material.

Hereinafter, first, the protein food material contained in the alternative restructured meat according to the present disclosure will be described.

(Protein food material)

A protein food material contained in the alternative restructured meat according to the present disclosure has an average value of ratios of a length of a major axis to a length of a minor axis of a void present in a cross section parallel to a fiber direction of 2 or more, and satisfies both of the following (1) and (2) in a multiple accumulated bite measurement.

$$\text{Pliability} < 2.94 \ ... \ (1)$$

$$\text{Brittleness} > 1.06 \ ... \ (2)$$

<Form of protein food material>

The protein food material has a fibrous region in at least a part of the protein food material.

Here, the "having a fibrous region on at least a part" means that a region having streak-like irregularities is present in at least a part of the protein food material.

<<Average value of aspect ratios of void>>

A protein food material contained in the alternative restructured meat according to the present disclosure has an average value of ratios of a length of a major axis to a length of a minor axis of a void present in a cross section parallel to a fiber direction (aspect ratio of void) of 2 or more.

In the present disclosure, the "fiber direction" means a longitudinal direction of a fiber present in the fibrous region of the protein food material, and is determined by the following method.

In a case where the protein food material to be measured has a size which can be torn by a tearing unit (for example, a hand), the "fiber direction" refers to a direction in which the protein food material is torn.

Specifically, an end part of the protein food material to be measured is gripped, and the protein food material is torn in a direction in which the protein food material can be torn to obtain a measurement sample. The obtained measurement sample is viewed from an upper surface, two points separated by 5 mm on any one tear line parallel to the tearing direction are randomly selected, and a direction of a straight line connecting the two points is defined as the fiber direction.

In a case where the protein food material to be measured cannot be torn by the tearing unit or it is difficult to tear the protein food material to be measured by the tearing unit, the "fiber direction" is determined based on a longitudinal direction of a fiber present in the fibrous region on the surface of the protein food material. Specifically, a streak-like convex portion present in the fibrous region on the surface of the protein food material to be measured is randomly selected, and a direction of a straight line along the longitudinal direction of the convex portion is defined as the fiber direction.

In a case where the extrusion direction of the protein food material can be confirmed, a direction along the extrusion direction is defined as the fiber direction.

The average value of the aspect ratios of the void is calculated by the following method.

The protein food material that has been stored frozen at -20°C is allowed to stand in an environment of room temperature (23°C) and relative humidity of 20% RH to be thawed.

After confirming the fiber direction, an X-ray transmission image is acquired under conditions of a radiation source of Cu (40 kV/30 mA), a lens of L4320, and binning of 2 using a three-dimensional X-ray microscope (product name "nano3DX", manufactured by Rigaku Corporation), and then a three-dimensional image is reconstructed.

A cross-sectional image in which a 1.5 cm square area region included in a plane parallel to the fiber direction is enlarged is extracted, and a dark portion surrounded by bright portions is visually detected as a void. Ten voids are randomly selected. In a case where the 10 voids are not present in the cross-sectional image, another cross-sectional image is extracted.

Among the points constituting the outline of the void, two points with the greatest distance between them are selected, a line segment connecting the two points is defined as a major axis, and a length of the line segment is defined as a length of the major axis. A straight line extending infinitely in the length direction at both ends of the major axis is defined as a major axis line. Among straight line groups orthogonal to the major axis line, a straight line group having two or more intersections with the outline of the void is defined as a minor axis line group. Among the minor axis line group, a straight line having the greatest distance between the intersections farthest from each other is selected as a minor axis line. A line segment connecting the intersections of the minor axis line and the two farthest points of the outline of the void is defined as a minor axis, and a length thereof is defined as a length of the minor axis of the void. The aspect ratio of the void is calculated using the following equation.

$$\text{Aspect ratio of void} = \text{length of major axis of void/length of minor axis of void}$$

The aspect ratios for the 10 voids are averaged to obtain an average value.

From the viewpoint of improving the fibrous texture of the cross section of the protein food material and the fibrous texture of the cross section of the alternative restructured meat, the average value of the aspect ratios of the void is 2 or more, and it is more preferably 4 or more, still more preferably 5 or more, particularly preferably 6 or more, and most preferably 8 or more. Meanwhile, from the viewpoint of the bite-off sensation and the chewy texture of the protein food material and the alternative restructured meat, the average value of the aspect ratios of the void is preferably 80 or less and more preferably 50 or less.

In a case where the average value of the aspect ratios of the void is 2 or more, in a case of tearing the protein food material, the tearing direction is maintained in the fiber direction, and the protein food material is easily torn straight, and thus the workability is excellent. The excellent workability of the protein food material makes it easy to reproduce the form of the muscle tissue that imitates livestock meat in the alternative restructured meat containing the protein food material, and thus the alternative restructured meat has an excellent fibrous texture that imitates livestock meat.

In addition, since the aspect ratio in the cross section perpendicular to the fiber direction is 2 or more, the protein food material is easily torn in the fiber direction during chewing, and thus the alternative restructured meat containing the protein food material can have a bite-off sensation and a chewy texture that imitate livestock meat.

In addition, the average value of the aspect ratios of the void being 2 or more also has an advantage that the absorption of a seasoning or the like is good in the protein food material and the alternative restructured meat containing the protein food material.

<<Porous structure>>

The protein food material preferably has a porous structure.

Here, the protein food material "having a porous structure" means that the protein food material has an isotropic or anisotropic porous structure. The anisotropic porous structure refers to a structure in which a pore shape appearing on a cut surface obtained by cutting the protein food material at any position is different depending on a cutting direction. The isotropic porous structure refers to a structure in which a pore shape appearing on a cut surface obtained by cutting the protein food material at any position is substantially the same regardless of the cutting direction. The protein food material preferably has an anisotropic porous structure. The pore shape appearing in the cut surface means a shape of a void that is visible in a case of cutting the protein food material. Since the void has anisotropy in shape, the tearing direction of the protein food material is easily maintained in one direction (that is, the void extension direction), and the protein food material can be torn straight, so that the workability can be further improved, and as a result, the fibrous texture of the alternative restructured meat that imitates livestock meat can be further improved.

Examples of a method of observing the cut surface include a method of cutting out a piece of the specimen and observing the cut surface with a microscope, and a method of observing the cut surface with X-ray computed tomography (CT).

<<Proportion of number of voids>>

In the protein food material, in a cross section of the protein food material that is parallel to a direction orthogonal to the fiber direction, a proportion of the number of voids (proportion of the number of voids) having a cross-sectional area of 0.1 mm$^2$ or less to a total number of voids present in the cross section is 45% or more, and is more preferably 55% or more, still more preferably 65% or more, and particularly preferably 70% or more. The upper limit value of the proportion of the number of voids is not particularly limited, but from the viewpoint of the ease of tearing and the elasticity of the protein food material, it is preferably 95% or less. In a case where the proportion of the number of voids is 45% or more, stress concentration easily occurs and the protein food material is easily cut in a case of tearing and/or compressive deformation, and thus the workability is excellent. The excellent workability of the protein food material makes it easy to reproduce the form of the muscle tissue that imitates livestock meat in the alternative restructured meat containing the protein food material, and thus the alternative restructured meat has an excellent fibrous texture that imitates livestock meat.

In addition, since the proportion of the number of voids is 45% or more, the wall separating the voids is less likely to buckle with respect to a compressive force perpendicular to the fiber direction. Therefore, the protein food material can have high elasticity, and the alternative restructured meat containing the protein food material can have a bite-off sensation and a chewy texture that imitate livestock meat.

In addition, the proportion of the number of voids being 45% or more also has an advantage that the absorption of a seasoning or the like is good in the protein food material and the alternative restructured meat containing the protein food material.

The proportion of the number of voids is calculated by the following method.

The protein food material that has been stored frozen at -20°C is allowed to stand in an environment of room temperature (23°C) and relative humidity of 20% RH to be thawed.

After the fiber direction has been determined, the protein food material is cut in parallel in a direction orthogonal to the fiber direction using a cutting unit to form a cut surface (cross section for measurement). As the cutting unit, a known cutting unit such as a knife or a single-edged razor may be used.

Using an optical microscope (product name: VHX-5000, manufactured by KEYENCE CORPORATION) to which a zoom lens (product name: VH-ZST, manufactured by KEYENCE CORPORATION) is attached, the cut surface (cross section for measurement) formed in the measurement sample is observed with an objective lens (product name: ZS-20, manufactured by KEYENCE CORPORATION) at a lens magnification of 30 times.

The void present in the observed cut surface can be detected using commercially available software (MatLab, version 2018).

After correcting the in-plane unevenness of brightness, the image is binarized based on the brightness to extract the dark portion.

The plurality of extracted dark portion regions are subjected to labeling processing and morphological processing, and the form analysis of each dark portion region is performed. The dark portion region having a predetermined area or less (0.01 mm$^2$ or less) is defined as noise and removed, and further, the void adjacent to the boundary of the image is removed.

The size of the void is detected, and the cross-sectional area (mm$^2$) of each void is calculated.

Based on the obtained cross-sectional area, a proportion (%) of the number of voids having a cross-sectional area of 0.1 mm$^2$ or less with respect to the total number of voids present in the cut surface is calculated.

The proportion (%) of the number of voids in the protein food material is a value obtained by determining the fiber direction by the above-described method for each of five measurement samples, which are prepared from the protein food material to be measured, performing the above-described measurement for each measurement sample, calculating the proportions (%) of the number of voids, and arithmetically averaging the obtained five number proportions (%).

A shape of the void included in the protein food material according to the present disclosure is not particularly limited, and may be any of a spherical shape, an elliptical shape, a cylindrical shape, a disk shape, or the like. From the viewpoint of improving the ease of tearing, the shape is preferably cylindrical.

<Mechanical properties of protein food material>

The protein food material contained in the alternative restructured meat according to the present disclosure satisfies both of the following (1) and (2) in the multiple accumulated bite measurement.

$$\text{Pliability} < 2.94 \ ... \ (1)$$

$$\text{Brittleness} > 1.06 \ ... \ (2)$$

The alternative restructured meat according to the present disclosure contains the protein food material satisfying both Pliability shown in (1) and Brittleness shown in (2), and thus has an excellent bite-off sensation that imitates livestock meat and an excellent chewy texture that imitates livestock meat.

The multiple accumulated bite measurement is a measurement for analyzing various mechanical properties of a measurement sample by performing an up-down motion following a chewing motion and gradually pressing an indenter into the measurement sample, and the stress applied to the indenter is detected by a load converter (load cell) to perform the analysis.

The multiple accumulated bite measurement is performed using a tensipresser.

As the tensipresser, a tensipresser MyBoy2 (manufactured by Takemoto Denki Co., Ltd.) can be used.

By the multiple accumulated bite measurement, mechanical properties such as Pliability, Brittleness, Tenderness, and Toughness of the measurement sample can be analyzed. The measurement is performed on a measurement sample at a sample temperature of 25°C.

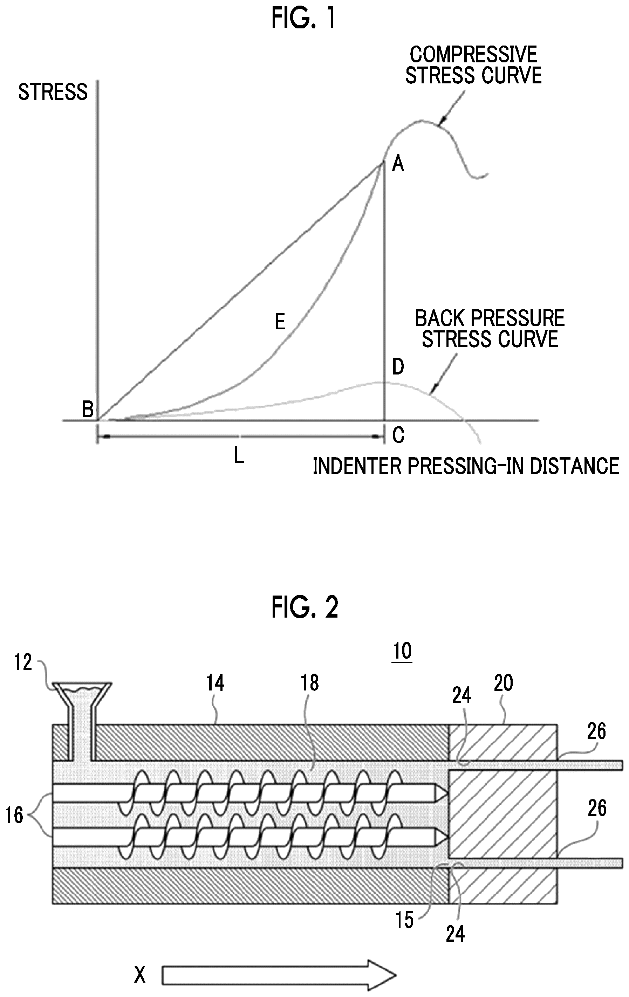

FIG. 1 is a graph (vertical axis: stress, horizontal axis: indenter pressing-in distance) for describing a stress curve obtained by the multiple accumulated bite measurement using the tensipresser.

In the graph shown in FIG. 1, a point B indicates a time at which the indenter comes into contact with the measurement sample, a point D indicates a point at which the measurement sample is broken and indicates the maximum stress of the back pressure stress curve, a compression pressing-in distance L indicates a distance from the point B to a point C (indenter pressing-in position at the point D), and a point A indicates a compressive stress at the point C.

As shown in FIG. 1, by the multiple accumulated bite measurement, a compressive stress curve indicated by BEA and a back pressure stress curve indicated by BD are obtained in conjunction with the up-down motion of pressing the indenter.

Hereinafter, the mechanical properties obtained by performing the multiple accumulated bite measurement on the protein food material will be described with reference to FIG. 1 as appropriate.

<<Pliability>>

Pliability is a value represented by an area ratio ($\triangle$ABC/curved surface AEBC) of an area of a triangle ($\triangle$ABC) formed by straight lines connecting the point A, the point B, and the point C to an area of a curved surface AEBC in the graph shown in FIG. 1.

Pliability indicates the "suppleness" of the measurement sample. Pliability is an indicator inversely corresponding to the elasticity of the measurement sample, and the smaller the value (that is, the larger the area of the curved surface AEBC with respect to the area of the triangle $\triangle$ABC), the larger the elasticity of the measurement sample.

In the multiple accumulated bite measurement, the protein food material satisfies the following (1), preferably satisfies the following (1a), more preferably satisfies the following (1b), still more preferably satisfies the following (1c), and particularly preferably satisfies the following (1d).

$$\text{Pliability} < 2.94 \ ... \ (1)$$

$$\text{Pliability} < 2.21 \ ... \ (1a)$$

$$\text{Pliability} < 1.95 \ ... \ (1b)$$

$$\text{Pliability} < 1.72 \ ... \ (1c)$$

$$\text{Pliability} < 1.50 \ ... \ (1d)$$

<<Brittleness>>

Brittleness is a value represented by a ratio (sample thickness/distance L) of the thickness of the measurement sample to the indenter pressing-in distance.

Brittleness indicates the "brittleness" of the measurement sample. Brittleness is an indicator corresponding to the ease of tearing of the measurement sample, and the larger the value (that is, the smaller the distance L), the easier the measurement sample is to tear.

In the multiple accumulated bite measurement, the protein food material satisfies the following (2), preferably satisfies the following (2a), more preferably satisfies the following (2b), still more preferably satisfies the following (2c), and particularly preferably satisfies the following (2d).

$$\text{Brittleness} > 1.06 \ ... \ (2)$$

$$\text{Brittleness} > 1.16 \ ... \ (2a)$$

$$\text{Brittleness} > 1.19 \ ... \ (2b)$$

$$\text{Brittleness} > 1.24 \ ... \ (2c)$$

$$\text{Brittleness} > 1.29 \ ... \ (2d)$$

<<Tenderness>>

Tenderness is a value of the compressive stress (compressive stress in a case of breakage) at the point A shown in FIG. 1. Tenderness indicates the "hardness" of the measurement sample.

Since Tenderness is affected by the thickness of the measurement sample, in the present disclosure, a value [$gw/cm^2/mm$] obtained by dividing the compressive stress [$gw/cm^2$] by the thickness [mm] of the measurement sample is used as an indicator of the hardness.

In the multiple accumulated bite measurement, the protein food material preferably further satisfies the following (3), more preferably satisfies the following (3a), more preferably satisfies the following (3b), still more preferably satisfies the following (3c), and particularly preferably satisfies the following (3d).

$$2000 < \text{Tenderness } [gw/cm^2]/\text{thickness [mm] of measurement sample} < 7500 \ ... \ (3)$$

$$2000 < \text{Tenderness } [gw/cm^2]/\text{thickness [mm] of measurement sample} < 5500 \ ... \ (3a)$$

$$2000 < \text{Tenderness } [\text{gw/cm}^2]/\text{thickness } [\text{mm}] \text{ of measurement sample} < 5000 \dots (3b)$$

$$2000 < \text{Tenderness } [\text{gw/cm}^2]/\text{thickness } [\text{mm}] \text{ of measurement sample} < 4500 \dots (3c)$$

$$2000 < \text{Tenderness } [\text{gw/cm}^2]/\text{thickness } [\text{mm}] \text{ of measurement sample} < 4000 \dots (3s)$$

In a case where the protein food material satisfies the above-described (3), the stress (that is, Tenderness [gw/cm$^2$]/thickness [mm] of measurement sample) in a case where the protein food material is torn is within an appropriate range, and thus a more excellent texture (specifically, a bite-off sensation and a chewiness) is obtained.

That is, by satisfying 2000 < Tenderness [gw/cm$^2$]/thickness [mm] of measurement sample, the protein food material tends not to be too easy to bite through, while its chewiness is not excessively weak. In addition, by satisfying Tenderness [gw/cm$^2$]/thickness [mm] of measurement sample < 7500, the protein food material tends to easily bite through, while its chewiness is not excessively strong.

<<Toughness>>

Toughness is a value of the area of the curved surface AEBC shown in FIG. 1, and corresponds to the amount of work applied until the measurement sample is broken. Toughness indicates the "chewiness" of the measurement sample.

Since Toughness is affected by the thickness of the measurement sample, in the present disclosure, a value [gw·cm/cm$^2$/mm] (that is, the total amount of work until the measurement sample is torn) obtained by dividing the amount of work [gw·cm/cm$^2$] applied until the measurement sample is broken by the thickness [mm] of the measurement sample is used as an indicator of the chewiness.

In the multiple accumulated bite measurement, the protein food material preferably further satisfies the following (4).

$$375 < \text{Toughness } [\text{gw·cm/cm}^2]/\text{thickness } [\text{mm}] \text{ of measurement sample} < 2000 \dots (4)$$

$$500 < \text{Toughness } [\text{gw·cm/cm}^2]/\text{thickness } [\text{mm}] \text{ of measurement sample} < 2000 \dots (4a)$$

$$575 < \text{Toughness } [\text{gw·cm/cm}^2]/\text{thickness } [\text{mm}] \text{ of measurement sample} < 2000 \dots (4b)$$

$$650 < \text{Toughness } [\text{gw·cm/cm}^2]/\text{thickness } [\text{mm}] \text{ of measurement sample} < 2000 \dots (4c)$$

In a case where the protein food material satisfies the above-described (4), the total amount of work (that is, Toughness [gw·cm/cm$^2$]/thickness [mm] of measurement sample) until the protein food material is torn is within an appropriate range, and thus a more excellent texture (a bite-off sensation and a chewiness) is obtained.

That is, by satisfying 375 < Toughness [gw·cm/cm$^2$]/thickness [mm] of measurement sample, the chewiness of the protein food material tends not to be insufficient. In addition, by satisfying Toughness [gw·cm/cm$^2$]/thickness [mm] of measurement sample < 2000, the chewiness of the protein food material tends not to be excessively strong, and a lingering mouthfeel after eating is less likely to be perceived.

In one aspect, the protein food material preferably satisfies all of the above-described (1), (2), (3), and (4).

Pliability, Brittleness, Tenderness, and Toughness of the protein food material can be adjusted by changing conditions of a step in a case of producing the protein food material (for example, conditions of expansion in an extrusion step), a water content, an additive such as a seasoning, and the like.

The protein food material satisfying the above-described (1) and (2) and preferably further satisfying the above-described (3) and/or (4) can be suitably obtained by a production method Y described later as a method for producing the protein food material.

In the present disclosure, Pliability, Brittleness, Tenderness, and Toughness by the multiple accumulated bite measurement are acquired by performing the following measuring method.

The multiple accumulated bite measurement is performed using a measurement sample prepared from the protein food material.

In order to separate the protein food material from the alternative restructured meat, the other constituent materials may be carefully pulled off from the protein food material using tweezers or the like. In addition, the protein food material before being processed into the alternative restructured meat can also be used.

As the measurement device, a texture property measuring device (product name "Tensipresser MyBoy2", manufactured by Takemoto Denki Co., Ltd.) is used.

As the indenter, a 5 mm$\varphi$ hollow cylindrical shape (cross-sectional area of 0.041 cm$^2$, length of 9 mm) is used.

The measurement is performed by pressing the indenter perpendicularly into the measurement sample. In this case, the stress in a case where the indenter is gradually pressed into the measurement sample by repeating an operation of pressing the indenter by 0.350 mm at 2 mm/sec after the indenter comes into contact with the measurement sample and then pulling the indenter out by 0.250 mm at 2 mm/sec is acquired.

The stress curve obtained by the measurement is analyzed by analysis software of the measurement device to obtain Pliability, Brittleness, Tenderness, and Toughness.

The protein food material for producing the measurement sample is used after being immersed in water at 90°C to be sufficiently water-absorbed and then slightly drained.

The thickness of the measurement sample after water absorption in a direction orthogonal to the fiber direction is set to 1.5 mm or more and 8 mm or less.

For the protein food material having a thickness in a direction orthogonal to the fiber direction of more than 8 mm, the measurement sample is produced by cutting out the protein food material to form two planes parallel to the fiber direction and parallel to each other, with a distance between the parallel planes being 8 mm or less. A single-edged razor or the like may be used as a unit for cutting out. The size of the measurement sample may be a size that can be installed in the measurement device.

In a case where the protein food material to be measured is sheet-shaped and a direction along a sheet surface and the fiber direction are parallel to each other, the measurement sample is produced by cutting the protein food material to have a thickness of 1.5 mm or more and 8 mm or less in a direction orthogonal to the sheet surface.

The pressing direction of the indenter in the measurement is set to a direction in which the longitudinal direction of the indenter is perpendicular to the fiber direction of the measurement sample.

In a case where the protein food material to be measured is sheet-shaped and a direction along a sheet surface and the fiber direction are not parallel to each other, and in a case where the protein food material to be measured is non-sheet-shaped (for example, spherical, irregular shape, or the like), the measurement sample is produced by cutting out the protein food material to form two planes parallel to the fiber direction and parallel to each other, with a distance between the parallel planes being 1.5 mm or more and 8 mm or less.

The pressing direction of the indenter in the measurement is set to a direction in which the longitudinal direction of the indenter is perpendicular to the fiber direction of the measurement sample.

In a case where the protein food material to be measured does not have a fiber direction, or in a case where the fiber direction cannot be discriminated from the appearance or the cross section of the protein food material and the fiber direction is unknown, the measurement is performed by producing the measurement sample according to the following (A1) or (A2).

(A1) In a case where the protein food material is sheet-shaped, the measurement sample having two planes parallel to the sheet surface is produced by cutting the protein food material to have a thickness of 1.5 mm or more and 8 mm or less in a direction orthogonal to the sheet surface.

The pressing direction of the indenter in the measurement is a direction in which the longitudinal direction of the indenter is perpendicular to the two planes of the measurement sample.

(A2) In a case where the protein food material is non-sheet-shaped (for example, spherical, irregular shape, or the like), the protein food material is cut out into a cube (with a side length of 6 mm or more and 8 mm or less) to produce the measurement sample.

The measurement is performed for each of three directions orthogonal to the surfaces facing each other in the cube, and an evaluation value on the surface where Tenderness is at its maximum is adopted.

<Content component of protein food material>

A content component of the protein food material according to the present disclosure will be described.

The protein food material preferably contains a protein, and as necessary, a colorant and other additives.

- Protein -

The protein food material according to the present disclosure contains a protein.

The protein preferably mainly includes a vegetable protein, and may include an animal protein in addition to the vegetable protein.

The fact that the vegetable protein is mainly included means that the vegetable protein accounts for 50% by mass or more of the total protein.

The vegetable protein is a protein collected from a plant.

The vegetable protein is not particularly limited as long as it is a protein collected from a plant. Examples of the origin of the vegetable protein include grains such as wheat, barley, oat, rice, and corn; beans such as soybean, pea, red bean, chickpea, broad bean, mung bean, and lupin; seeds such as almond, peanut, cashewnut, pistachio, hazelnut, Macadamia nut, linseed, sesame, rapeseed, cotton seed, safflower, and sunflower; tubers and roots such as potato, sweet potato, Japanese yam, Jerusalem artichoke, and cassava; vegetables such as asparagus, globe artichoke, cauliflower, broccoli, and green soybean; fruits such as banana, jackfruit, kiwi fruit, coconut, avocado, and olive; mushrooms such as a mushroom, eryngii mushroom, shiitake mushroom, shimeji mushroom, and a mushroom; and algae such as chlorella, spirulina, euglena, laver, kelp, wakame seaweed, hijiki seaweed, agar weed, and mozuku seaweed.

Among these, from the viewpoint of obtaining a chunk-like meat substitute which has an appearance and texture similar to livestock meat, the origin of the vegetable protein is preferably at least one selected from the group consisting of wheat, soybean, pea, and rice, and more preferably at least one selected from the group consisting of soybean and wheat. As the vegetable protein, from the viewpoint of simulating the high elasticity of livestock meat and obtaining the nutritional value of livestock meat at a low cost, at least one selected from the group consisting of defatted soybean protein and wheat gluten is particularly preferable.

The vegetable protein may include one kind of plant-derived protein or may include two or more kinds of plant-derived proteins. In a case where two or more kinds of vegetable proteins are included, the type and the blending ratio thereof can be appropriately determined.

From the viewpoint of simulating the high elasticity of livestock meat, the mass ratio of the content of the defatted soybean protein to the content of the wheat gluten is preferably 1.5 to 4 and more preferably 1.8 to 3.5.

Here, in the present disclosure, the "chunk" refers to raw meat which is not cooked and is cut out from livestock for food to have an optional size, and cooked meat obtained by cooking the raw meat, and refers to livestock meat which is not ground or minced after being cut out from the livestock.

The animal protein is a protein collected from an animal.

The animal protein may be collected from an animal, and a protein having the same amino acid sequence as a protein collected from an animal may be produced by cell culture or an enzyme reaction, and extracted.

The animal protein is not particularly limited as long as it is a protein collected from an animal. Examples of the animal protein include collagen, gelatin, keratin, fibroin, sericin, casein, conchiolin, elastin, protamine, yolk protein, and egg white protein.

Only one kind of animal protein may be included, or two or more kinds thereof may be included.

A content of the protein is preferably 5% by mass to 80% by mass, more preferably 7% by mass to 70% by mass, and still more preferably 10% by mass to 60% by mass with respect to the entire protein food material.

- Colorant -

The protein food material according to the present disclosure preferably further includes a colorant. In a case where the protein food material includes a colorant, it is easy to obtain the same color tint as the color tint exhibited by the brown meat after heating.

The colorant is preferably an edible and brown colorant.

Examples of the colorant include a cocoa coloring agent, a Monascus coloring agent, and a plant charcoal powder coloring agent, and among these, a cocoa coloring agent is preferable.

The protein food material may include only one kind of colorant, or may contain two or more kinds thereof.

A content of the colorant contained in the protein food material is preferably 0.01% by mass to 3% by mass, more preferably 0.05% by mass to 2% by mass, and still more preferably 0.1% by mass to 1% by mass with respect to the entire protein food material.

- Water -

The protein food material may contain water.

A content of the water in the protein food material is preferably 10% by mass to 90% by mass with respect to the entire protein food material containing the water.

The protein food material may contain other additives, in addition to the protein and the colorant contained as necessary. Examples of the other additives include a seasoning, an inorganic salt or an organic salt, sugar, oil and/or fat, a thickener, a plasticizer, a surfactant, and a fragrance component. A content of the other additives can be set according to the purpose.

<Method for producing protein food material>

The protein food material according to the present disclosure is preferably produced by adding the raw material protein and water to an extruder and kneading and extruding the raw material protein and water.

By applying a shear stress before extruding at atmospheric pressure, the protein is easily aligned in a fibrous manner, and the fibrous region is formed in the protein food material. In a case where the pressure after the kneading is equal to or less than the saturated water vapor pressure, the protein is expanded by boiling of the water, and the protein food material has a porous structure.

It is preferable that a specific method for producing the protein food material includes a step of extruding a protein-containing mixture containing at least a protein and water and preferably containing a colorant from an extruder (hereinafter, also referred to as an extrusion step).

In one aspect, the method for producing a protein food material is preferably a method for producing a protein food material (hereinafter, also referred to as a "production method Y") including a step of pressurizing and heating a protein-containing mixture containing a protein and water and preferably containing a colorant in an extrusion portion of a biaxial extruder to knead the mixture, and then extruding the kneaded protein-containing mixture at a temperature of 150°C or higher and lower than 180°C at an outlet portion of the extrusion portion while expanding the mixture inside a jetting die mounted on the end on a downstream side of the extrusion portion in an extrusion direction.

The production method Y will be described.

· Raw material

As the raw material of the protein food material, it is preferable that the water is contained in 1 part by mass or more and 6 parts by mass or less with respect to 10 parts by mass of the raw material containing a protein (preferably, the vegetable protein). The "raw material containing the vegetable protein" may be the vegetable protein itself or a complex containing the vegetable protein and other components. It is also preferable that the raw material further contains a colorant. Examples of the complex containing the vegetable protein and other components include defatted soybean flour, which is a complex including a protein, a saccharide, and a fiber.

The details of each component as a raw material of the protein food material are the same as those described above in the section <Content component of protein food material>, and will not be described here.

· Extrusion step

The extrusion step is a step of pressurizing and heating a protein-containing mixture containing a protein (preferably, the vegetable protein) and water in an extrusion portion of a biaxial extruder to knead the mixture, and then extruding the kneaded protein-containing mixture at a temperature of 150°C or higher and lower than 180°C at an outlet portion of the extrusion portion while expanding the mixture inside a jetting die connected to the end on a downstream side of the extrusion portion in an extrusion direction.

The extruder used in the extrusion step is a biaxial extruder, and for example, a non-intermeshing counter-rotating biaxial screw extruder, an intermeshing counter-rotating biaxial screw extruder, or an intermeshing co-rotating biaxial screw extruder can be used.

Hereinafter, the extrusion step will be described with reference to the accompanying drawings as appropriate. It should be noted that each element in the drawing is not always to scale, the main focus is on clearly showing the principles of the present disclosure, and some parts are emphasized.

FIG. 2 is a schematic cross-sectional view showing an example of the biaxial extruder.

As shown in FIG. 2, in the extrusion step, a raw material of the protein food material is charged into a biaxial extruder 10 from a hopper 12 (raw material supply portion).

The charged raw materials are kneaded in the biaxial extruder 10 by heating an extrusion portion 14 and rotating two screws 16 comprised in the extrusion portion 14 to form a protein-containing mixture 18, and the protein-containing mixture 18 is extruded in an extrusion direction X.

The temperature of the protein-containing mixture in the extrusion portion 14 is preferably 40°C or higher and 180°C or lower.

Specifically, it is preferable that the temperature of the protein-containing mixture is 40°C or higher and 150°C or lower on an upstream side of the extrusion portion 14 in the center part in an extrusion direction (that is, a part from a raw material supply portion to the center of the extrusion portion).

It is preferable that the temperature of the protein-containing mixture is 130°C or higher and 180°C or lower in the extrusion portion 14 in the center part in the extrusion direction (that is, the center of axial direction length of the extrusion portion 14).

The temperature of the protein-containing mixture is 150°C or higher and lower than 180°C and preferably 150°C or higher and 170°C or lower on a downstream side of the extrusion portion 14 in the center part in an extrusion direction (that is, a part from the center of axial direction length of the extrusion portion 14 to the outlet portion of the extrusion portion 14). That is, the temperature of the protein-containing mixture in the outlet portion of the extrusion portion 14 is 150°C or higher and lower than 180°C and preferably 150°C or higher and 170°C or lower.

By setting the temperature of the protein-containing mixture within the above-described range, the protein-containing mixture can be sufficiently softened in the extrusion portion 14 to form a uniform mixture.

The temperature of the protein-containing mixture in the extrusion portion 14 can be measured using a temperature/pressure gauge (for example, "CZ-200P-HB-SNN-050P*NNN-K0100" manufactured by RKC INSTRUMENT INC.) installed in the extrusion portion 14.

The biaxial extruder 10 is mounted with a jetting die 20 at the end on the downstream side of the extrusion portion 14 in the extrusion direction.

As shown in FIG. 2, the jetting die 20 comprises a slit-shaped jetting flow passage 24 provided to communicate with the inside of the extrusion portion 14, and the protein-containing mixture 18 flows through the flow passage 24 through an outlet portion 15 of the extrusion portion 14 and is jetted from an outlet 26 which is the outlet portion of the jetting die 20. The shape of the jetting die is not particularly limited, but is preferably flat-shaped or cylindrical-shaped.

A gap (lip clearance) of the outlet 26 of the jetting die 20 is preferably 1 mm or more and 10 mm or less, and more preferably 1 mm or more and 5 mm or less. The gap (lip clearance) of the outlet refers to a shortest length in the outlet.

From the viewpoint of controlling the temperature profile inside the jetting die and obtaining a protein food material having excellent fibrous texture and chewy texture that imitate livestock meat, a length of the jetting die 20 along the extrusion direction X is preferably 150 mm or more and 1,000 mm or less, and more preferably 200 mm or more and 650 mm or less.

A ratio (length/lip clearance) of the length of the jetting die 20 in the extrusion direction X to the gap (lip clearance) of the outlet is preferably 15 or more, and more preferably 40 or more. The upper limit value of the ratio is preferably 1000.

It is preferable that the jetting die 20 includes a temperature control mechanism. By using the jetting die including the temperature control mechanism, the temperature profile inside the jetting die is easily controlled. That is, it is easier to control the position of the expansion point inside the jetting die, the temperature of the protein-containing material during expansion, and the like.

Here, examples of the temperature control mechanism include a mechanism including a jacket in which a medium (a medium such as water, glycol, and air) having a controlled temperature is circulated in a peripheral part of the jetting die, and a mechanism capable of adjusting the lip clearance of the jetting die.

It is still more preferable that the jetting die includes a plurality of temperature control mechanisms in order to control the temperature from the inlet of the jetting die (that is, the connecting portion with the extrusion portion 14) to the outlet portion of the jetting die (that is, the outlet 26) in stages.

The protein-containing mixture 18 kneaded by heating and pressurizing in the extrusion portion 14 is temperature-controlled in a case of passing through the jetting die 20, and is jetted from the outlet 26 of the jetting die 20.

The expansion of the protein-containing mixture inside the jetting die will be described.

As shown in FIG. 2, the protein-containing mixture 18 extruded from the extrusion portion 14 to the jetting die 20 is sufficiently softened by a shear stress due to heat and kneading, and has fluidity. Furthermore, the protein-containing mixture 18 is rubbed with the inner wall of the jetting flow passage 24 and receives a shear stress downstream of the extrusion direction X inside the jetting die 20, so that the protein is aligned and fiberized while passing through the inside of the jetting die 20.

A temperature lowering rate of the protein-containing mixture from the outlet portion of the extrusion portion 14 to the outlet of the jetting die 20 is preferably 0.2 °C/mm or less, and a temperature of the protein-containing material 18 at the outlet 26 of the jetting die 20 is preferably 95°C to 130°C. The temperature of the protein-containing mixture 18 is more preferably 95°C to 120°C and still more preferably 95°C to 110°C. By controlling the temperature lowering rate of the protein-containing mixture 18 to 0.2 °C/mm or less and controlling the temperature of the protein-containing mixture 18 at the outlet 26 to be within the above-described range, a small-sized void (for example, a void having a cross-sectional area of 0.1 mm$^2$ or less in a direction perpendicular to the fiber direction) is likely to occur in a case where the protein-containing mixture 18 is expanded.

The reason is not clear, but it is presumed that, in a process of being slowly cooled from 130°C to 95°C, the protein-containing mixture softened to a high temperature (that is, 150°C or higher and lower than 180°C at the outlet portion of the extrusion portion) and a uniform state is gradually solidified and thermally contracted around 130°C, so that a portion where the pressure is locally equal to or less than the saturated water vapor pressure occurs inside the jetting die, and water contained in the protein-containing mixture is vaporized (expanded).

It is presumed that, by controlling the temperature lowering rate of the protein-containing mixture to 0.2 °C/mm or less and repeatedly and continuously performing a gradual decrease in local pressure and expansion, minute voids form a dense porous structure (for example, a proportion of the number of voids having a cross-sectional area of 0.1 mm$^2$ or less in a cross section parallel to a direction orthogonal to the fiber direction to the total number of voids present in the cross section is 45% or more). The small and dense voids in the porous structure are correlated with the fibrous texture and chewy texture that imitate livestock meat.

The void size formed by the expansion of the protein-containing mixture largely depends on the temperature and the apparent viscosity of the protein-containing mixture during expansion. From such a viewpoint, the temperature of the protein-containing mixture at the expansion start point inside the jetting die is preferably 120°C to 140°C and more preferably 125°C to 135°C.

In addition, the apparent viscosity of the protein-containing mixture at the expansion start point inside the jetting die is preferably 1 Pa·s to 5,000 Pa·s and more preferably 1 Pa·s to 1,000 Pa·s. In a case where the apparent viscosity of the protein-containing mixture during expansion is 1 Pa·s or more (that is, the fluidity is not too high), the void size tends not to be too large. In addition, in a case where the apparent viscosity of the protein-containing mixture during expansion is 5,000 Pa·s or less (that is, the fluidity of the protein-containing mixture during expansion is not too low), the void is well formed, and the void size tends not to be too small.

In the present disclosure, the apparent viscosity is a numerical value calculated from the following equation by assuming that the protein-containing mixture is an incompressible Newtonian fluid and measuring a pressure (ΔP) between two points inside the jetting die.

$$\text{Apparent viscosity } (\eta) = \Delta P \cdot WH^{-3}/12QL$$

W: width of jetting die, H: lip clearance of jetting die, L: length of jetting die

A position where the protein-containing mixture 18 starts to expand inside the jetting die 20 is preferably at least 10 mm upstream of the outlet portion (outlet 26) of the jetting die 20 in the extrusion direction X. The alignment properties of the expanded void largely depend on where the expansion occurs in the longitudinal direction of the jetting die. Therefore, by setting the position where the protein-containing mixture 18 starts to expand to at least 10 mm upstream of the outlet portion (outlet 26) of the jetting die 20 in the extrusion direction X, the void is stretched in the longitudinal direction of the jetting die by rubbing between the wall surface of the jetting die and the protein-containing mixture 18 (that is, by application of a shearing force), so that the alignment properties of the void are obtained.

The expansion point indicates a position where the protein-containing mixture is partially solidified and contracted inside the jetting die, so that the pressure inside the die is locally equal to or less than the saturated water vapor pressure, and expansion (evaporation of water inside the protein-containing mixture) occurs. In a case where the expansion starts, a local "decrease in pressure ⇔ expansion" continuously occurs. In the present disclosure, a position where the expansion first occurs is referred to as an expansion start point.

The local pressure decrease cannot be directly measured. Therefore, in the present disclosure, a point where the bulk pressure inside the jetting die measured by a temperature/pressure gauge ("CZ-200P-HB-SNN-050P*NNN-K0100" manufactured by RKC INSTRUMENT INC.) installed at an interval of about 50 mm in the longitudinal direction of the jetting die starts to decrease steeply is defined as the expansion start point.

A maximum pressure drop rate from the outlet portion 15 of the extrusion portion 14 to the outlet 26 of the jetting die 20 is preferably 0.02 MPa/mm or more and more preferably 0.04 MPa/mm or more. The upper limit value of the maximum pressure drop rate is, for example, preferably 0.1 MPa/mm or less.

The pressure at a position of 10 mm on the upstream side of the outlet 26 of the jetting die 20 in the extrusion direction X is preferably 1.0 MPa or less and more preferably 0.1 MPa or less. In a case of being jetted from the outlet 26 of the jetting die 20, the pressure inside the jetting die 20 is decreased to the saturated water vapor pressure or less. Consequently, in a case where the protein-containing mixture passing through the jetting die 20 is jetted to the open space, the formation of large-sized voids is suppressed without causing undesirable expansion, so that it is easy to obtain a chewy texture.

It is preferable that the jetting die includes a pressure reduction mechanism. An installation aspect of the pressure reduction mechanism is not particularly limited, and the pressure reduction mechanism may be continuously installed from the inlet portion to the outlet portion (outlet) of the jetting die, or may be installed for each fixed section. Examples of the pressure reduction mechanism include increasing the clearance for each fixed section inside the jetting die and providing a concave-convex shape on the inner wall of the jetting die. From the viewpoint of stabilizing the position of the expansion point, it is more preferable that the concave-convex shape is provided on the inner wall of a region from a position where the expansion of the protein-containing mixture is desired to start to the outlet inside the jetting die as the pressure reduction mechanism.

From the viewpoint of obtaining a protein food material having an excellent fibrous texture that imitates livestock meat, a jetting amount of the protein-containing mixture 18 is preferably 10 kg/hr or more and 100 kg/hr or less, and more preferably 20 kg/hr or more and 80 kg/hr or less.

The extruded mixture (that is, the protein food material) can be subjected to desired processing such as forming to obtain an alternative restructured meat.

The mixture extruded in the extrusion step can be used as a meat substitute as it is without performing any particular processing. That is, the extruded mixture (protein food material) can also be used as it is as a heated meat substitute. The mixture may be cooked with any seasoning or the like in a state of being extruded.

· Forming step

The production method Y may include a forming step after the extrusion step.

The forming step may include cutting the extruded mixture (that is, the protein food material) into a shape according to the purpose. For example, the cut protein food material can also be used as a meat substitute having a thin sliced meat-like shape. The cut protein food material may be cooked with any seasoning or the like.

The forming step may include processing the protein food material into a formed body having a shape according to the purpose.

For example, by collecting the protein food material in a lump and forming the protein food material into a shape similar to a shape of a chunk of meat, it is possible to manufacture a lean-like portion of a chunk-like alternative restructured meat. From the viewpoint of obtaining an alternative restructured meat having a texture closer to that of a chunk of meat, it is preferable that the raw materials of the extruded lean-like portion are collected in a lump, and the extrusion directions of the raw materials of the extruded lean-like portion are aligned in the same direction.

Alternatively, the extrusion direction inside the protein food material may be aligned by the same method such as a method of collecting the protein food material in a lump and then applying pressure to flatten the protein food material, and a method of passing the protein food material through a tubular space.

· Other steps

The production method Y may include a step other than the above-described extrusion step and the above-described forming step. As the other steps, any step such as a drying step, a crushing step, and a packaging step may be included.

The protein food material described above may be used as it is, or as a mixture obtained by mixing the protein food material with a desired additive component, or may be used as one of materials for manufacturing a processed product such as an alternative restructured meat.

The alternative restructured meat according to the present disclosure contains the protein food material as one of the materials, and examples of the additive component that is mixed with the protein food material in a case of manufacturing the alternative restructured meat include oil and/or fat, a binder, an enzyme, and other additives.

- Oil and/or fat -

The lean-like portion included in the livestock meat has a lower content of oil and/or fat than the fat-like portion, but may contain a certain amount of oil and/or fat. Therefore, by combining the protein food material and the oil and/or fat, it is easy to obtain a state similar to the composition of the lean meat of the livestock meat and a texture closer to the lean meat of the livestock meat.

The oil and/or fat is preferably a vegetable oil.

Since the vegetable oil is derived from a plant, it can be easily used even in a case where it is necessary to avoid or restrict intake of animal-derived food for reasons such as health, animal welfare, religion, allergy, and food crisis due to population increase.

A content of the oil and/or fat is preferably 0% by mass or more and 50% by mass or less, more preferably 1% by mass or more and 40% by mass or less, and still more preferably 3% by mass or more and 30% by mass or less with respect to the entire mixture containing the protein food material and the oil and/or fat.

Unlike a fat-like portion of the livestock meat, the oil and/or fat may be contained in the entire mixture containing the protein food material and the oil and/or fat with high uniformity, and not have an appearance similar to fat of a chunk of meat.

- Binder and enzyme -

The protein food material is also preferably mixed with at least one selected from the group consisting of a binder and an enzyme which hardens the protein, as necessary.

By containing the protein food material and at least one selected from the group consisting of a binder and an enzyme which hardens the protein, it is easy to maintain the protein food material in one lumped shape.

The binder is not particularly limited as long as it is edible and can maintain the shape of the protein food material.

Examples of the binder include a protein, thickening polysaccharides, and starch. The binder may be contained alone or two or more thereof may be contained.

The protein used as the binder may be the same as or different from the protein contained in the protein food material.

Examples of the protein which is used as the binder include a vegetable protein and an animal protein.

Examples of the vegetable protein which is used as the binder include a protein of which the origin is wheat, soybean, rice, or the like.

Examples of the animal protein which is used as the binder include a milk protein and an egg white protein.

Here, as the enzyme which hardens the protein, it is preferable to use transglutaminases.

As the transglutaminase, a commercially available product can be used, and examples thereof include ACTIVA (registered trademark) series manufactured by Ajinomoto Co., Inc.

Examples of the thickening polysaccharides include agar, carrageenan (κ-carrageenan, ι-carrageenan), alginic acid, alginate, agarose, furcelleran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, gum arabic, arabinogalactan, dextran, carboxymethylcellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin.

The thickening polysaccharides may be used as a gelling agent, or may be a gelled product.

It is preferable that the gelling agent is used in combination with a gelation promoting agent.

The gelation promoting agent is a compound which promotes gelation by coming into contact with the gelling agent, and the function of the gelation promoting agent is exhibited by a specific combination with the gelling agent.

A preferred combination of the gelling agent and the gelation promoting agent is as follows.

1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent,

2) A combination of boric acid or a boron compound as the gelation promoting agent, and guar gum, locust bean gum, tara gum, cassia gum, or the like as the gelling agent,

3) A combination of an acid or an alkali as the gelation promoting agent, and alginate, glucomannan, pectin, chitin, chitosan, curdlan, or the like as the gelling agent,

4) Water-soluble polysaccharides which react with the gelling agent to form a gel are used as the gelation promoting agent; specific examples thereof include a combination in which xanthan gum is used as the gelling agent and cassia gum is used as the gelation promoting agent, and a combination in which carrageenan is used as the gelling agent and locust bean gum is used as the gelation promoting agent.

From the viewpoint of obtaining an appearance and a texture similar to those of the livestock meat, the combination of the gelling agent and the gelation promoting agent is preferably the above-described "1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent".

The thickening polysaccharides used as the binder may be thermally irreversible gel-forming polysaccharides or thermally reversible gel-forming polysaccharides.

The thermally irreversible gel is a gel which maintains a gel state even in a case of being heated, after the gel is once formed. The thermally irreversible gel-forming polysaccharides are polysaccharides which form the thermally irreversible gel.

The thermally irreversible gel-forming polysaccharides are preferably polysaccharides which are cross-linked by a reaction with a cation. Examples of the cation include cations exemplified in the description of a fat mass composition later. Examples of the thermally irreversible gel-forming polysaccharides include alginic acid, curdlan, pectin (low-methoxyl (LM) pectin, high-methoxyl (HM) pectin, and the like), and low-acyl (LA) gellan gum.

The thermally reversible gel-forming polysaccharides are polysaccharides which form a thermal reversible gel. Examples of the thermally reversible gel-forming polysaccharides include gelatin, agar, carrageenan, furcelleran, native gellan gum, locust bean gum, xanthan gum, guar gum, psyllium seed gum, glucomannan, tara gum, and tamarind seed gum.

In a case where the binder includes the thermally irreversible gel-forming polysaccharides or the thermally reversible gel-forming polysaccharides, the binder may further contain a gelation retardant. The gelation retardant is a compound which has an action of inhibiting gelation of the thermally irreversible gel-forming polysaccharides or the thermally reversible gel-forming polysaccharides. The gelation retardant is preferably a chelating agent.

As the chelating agent, a known chelating agent can be suitably used. Examples of the chelating agent include an oxycarboxylic acid such as tartaric acid, citric acid, a gluconic acid; an aminocarboxylic acid such as iminodiacetic acid (IDA), nitrilotriacetic acid (NTA), and ethylenediaminetetraacetic acid (EDTA); a condensed phosphoric acid such as pyrophosphoric acid and tripolyphosphoric acid; and a salt thereof.

Examples of the starch include wheat starch, cassava starch, rice starch, glutinous rice starch, corn starch, waxy corn starch, sago starch, potato starch, arrowroot starch, lotus root starch, mung bean starch, sweet potato starch, waxy potato starch, waxy cassava starch, and waxy wheat starch.

The total content of the binder and the enzyme which hardens the protein, contained in the protein food material, is preferably 0.1% by mass or more and 30% by mass or less, more preferably 0.5% by mass or more and 25% by mass or less, and still more preferably 1% by mass or more and 20% by mass or less with respect to the entire protein food material.

- Other additives -

The protein food material may be mixed with other additives as necessary.

Examples of the other additives include water, a seasoning, an acidulant, a bittering agent, a spice, a sweetener, an antioxidant, a color developing agent, a flavoring agent, a stabilizer, and a preservative.

A content of the other additives is preferably 0% by mass or more and 20% by mass or less with respect to the entire mixture containing the protein food material and the additive.

The alternative restructured meat according to the present disclosure containing the protein food material described above will be described.

<Alternative restructured meat>

The alternative restructured meat according to the present disclosure contains a protein food material.

As described above, the alternative restructured meat according to the present disclosure contains the protein food material having predetermined mechanical properties, that is, satisfying the above-described (1) and (2) and preferably further satisfying the above-described (3) and/or (4), whereby the alternative restructured meat has a fibrous texture that imitates livestock meat and a bite-off sensation and a chewy texture that imitate livestock meat.

In the alternative restructured meat according to the present disclosure, it is preferable that the protein food material is aligned in a predetermined direction. In a case where the protein food material is aligned in a predetermined direction, the alternative restructured meat has an excellent fibrous texture that imitates livestock meat and an excellent bite-off sensation and chewy texture that imitate livestock meat.

In the alternative restructured meat, the protein food material being aligned in a predetermined direction means that the fiber direction of the protein food material is aligned in one direction.

In the present disclosure, in a case where the integrated alignment degree is 1.1 or more and the standard deviation of the alignment angle is 20 or less in the cross section of the protein food material in the direction parallel to the fiber direction, it is determined that the protein food material is aligned in a predetermined direction in the alternative restructured meat.

The integrated alignment degree and the standard deviation of the alignment angle are calculated from an image obtained by imaging the cross section of the alternative restructured meat by the method described in Enomae, T., Han, Y.-H. and Isogai, A., "Nondestructive determination of fiber orientation distribution of paper surface by image analysis", Nordic Pulp and Paper Research Journal 21(2): 253-259 (2006). http://www.enomae.com/publish/pdf/2006NPPRJ_Fi breOrientation.pdf.

= Procedure for measuring integrated alignment degree =

The integrated alignment degree is calculated from an image obtained by imaging the cross section of the protein food material contained in the alternative restructured meat in the direction parallel to the fiber axis direction by the method described in Enomae, T., Han, Y.-H. and Isogai, A., "Nondestructive determination of fiber orientation distribution of paper surface by image analysis", Nordic Pulp and Paper Research Journal 21(2): 253-259 (2006). http://www.enomae.com/ publish/pdf/2006NPPRJ_FibreOrientation.pdf.

Specifically, the integrated alignment degree is calculated by the following procedures of "- Imaging of cross section -" and "- Calculation of integrated alignment degree -".

- Observation of cross section -

First, the alternative restructured meat is cut to expose the cross section, and the cross section of the alternative restructured meat is imaged under the following conditions. In this case, the cross section of the alternative restructured meat exposed by cutting the alternative restructured meat along the direction parallel to the fiber direction of the protein food material is imaged.

· Imaging condition

Digital camera: manufactured by FUJIFILM Corporation, product name GFX100
Lens: GF63mmF2.8 R WR
Imaging mode: monochrome
F number: F4
Shutter speed: 1/30
ISO sensitivity: 100
Light amount on surface of meat substitute: EV = 9; 1280 lux
Background during imaging: white

- Calculation of integrated alignment degree -

From the cross-sectional image obtained by imaging, a portion corresponding to a region where one side of the cross section of the alternative restructured meat is a square of 25 mm is cut out as a unit area and converted into $512 \times 512$ pixels. The data converted into an amplitude spectrum by performing Fourier transformation and polar coordinate transformation on the image based on the above-described Enomae, T., Han, Y.-H. and Isogai, A., "Nondestructive determination of fiber orientation distribution of paper surface by image analysis", Nordic Pulp and Paper Research Journal 21(2): 253-259 (2006). http://www.enomae.com/publish/pdf/2006NPPRJ_FibreOrientation.pdf per unit area is integrated and approximated at 25 points to obtain an approximate ellipse. The value obtained by calculating the alignment degree from the approximate ellipse is defined as the integrated alignment degree.

Regarding the calculation of the integrated alignment degree, any method may be used as long as the calculation can be performed, and for example, a non-destructive paper surface fiber alignment analysis program FiberOri8single03.exe, which is free software, can be used. As the non-destructive paper surface fiber alignment analysis program, the free software described in the following site may be used.

http://www.enomae.com/FiberOri/index.htm

In a case where the size of the alternative restructured meat is less than 25 mm, the same alternative restructured meat is superimposed to have a size of 25 mm or more, and imaging and calculation of the integrated alignment degree are performed.

= Procedure for measuring standard deviation of alignment angle =

The standard deviation of the alignment angle is calculated from an image obtained by imaging the cross section of the protein food material contained in the alternative restructured meat in the direction parallel to the fiber direction by the method described in Enomae, T., Han, Y.-H. and Isogai, A., "Nondestructive determination of fiber orientation distribution of paper surface by image analysis", Nordic Pulp and Paper Research Journal 21(2): 253-259 (2006). http://www.enomae.com/publish/pdf/2006NPPRJ_FibreOrientation.pdf.

Specifically, the standard deviation is calculated by the following procedures of "-Imaging of cross section -" and "-Calculation of standard deviation of alignment angle -".

- Observation of cross section -

The same procedure as the "- Observation of cross section -" described in the section "= Procedure for measuring integrated alignment degree =" is performed 25 times by changing the imaging point to obtain a total of 25 cross-sectional images of the alternative restructured meat.

- Calculation of standard deviation of alignment angle -

From the 25 cross-sectional images obtained by imaging, an image is obtained by cutting out a portion corresponding to a region where one side of the cross section of the alternative restructured meat is a square of 25 mm as a unit area and converting the portion into 512 × 512 pixels. One unit area is cut out for each cross-sectional image, and a total of 25 unit areas are obtained.

From the data converted into an amplitude spectrum by performing Fourier transformation and polar coordinate transformation on the image based on the above-described Enomae, T., Han, Y.-H. and Isogai, A., "Nondestructive determination of fiber orientation distribution of paper surface by image analysis", Nordic Pulp and Paper Research Journal 21(2): 253-259 (2006). http://www.enomae.com/publish/pdf/2006NPPRJ_FibreOrientation.pdf per unit area, an approximate ellipse is obtained. One approximate ellipse is obtained for each unit area, and a total of 25 approximate ellipses are obtained.

The alignment angle of each approximate ellipse is calculated, and the standard deviation of the value is defined as the standard deviation of the alignment angle.

The same program as the "non-destructive paper surface fiber alignment analysis program" described above can be used for the calculation of the standard deviation of the alignment angle.

In a case where the size of the alternative restructured meat is less than 25 mm, the same alternative restructured meat is superimposed to have a size of 25 mm or more, and imaging and calculation of the standard deviation of the alignment angle are performed.

In addition, in a case where the alignment angle is near 0° (or 180°), the standard deviation is large. Therefore, imaging or the direction of the image is adjusted such that the stretching direction, the visible alignment direction, or an alignment direction obtained by a preliminary measurement is the up-down direction, that is, the alignment angle of 45° or more and 135° or less, and the standard deviation is then calculated.

It is preferable that the alternative restructured meat is an alternative restructured meat for a chunk of meat (hereinafter, also referred to as "alternative meat for a chunk of meat").

The chunk of meat preferably has, on a surface thereof, a lean-like portion having a color close to red and a fat-like portion having a color close to white. In addition, the fat on the surface of the chunk of meat has a certain area (for example, in a chunk of meat of a part with little fat, such as beef fillet, the area of the fat on the surface of the chunk of meat is approximately 3%). In addition, the fat often has an elongated shape on the surface of the chunk of meat.

From the viewpoint of improving taste and texture of the alternative restructured meat, the alternative restructured meat preferably contains the protein food material and the oil and/or fat, and more preferably contains the protein food material, the oil and/or fat, and the polysaccharides. In a certain aspect, the oil and/or fat may be a granular body containing the oil and/or fat. The granular body containing the oil and/or fat may have a form such as a capsule-like oil and/or fat and oil and/or fat encapsulated in a gel.

An average particle diameter of the granular body may be 10 μm or more and 500 μm or less. The average particle diameter of the granular body is a value measured by observing the granular body with a transmission optical microscope.

The polysaccharides can function as a binder between the protein food material and the granular body containing the oil and/or fat. From such a viewpoint, in one aspect, the alternative restructured meat according to the present disclosure preferably contains a binder. Examples of the polysaccharides include the above-described thickening polysaccharides which may be contained in the protein food material as a binder.

Hereinafter, the alternative restructured meat will be described using the chunk-like meat substitute as an example.

(Lean-like portion)

The lean-like portion refers to a portion corresponding to a portion which appears as lean in the chunk-like meat substitute.

The lean-like portion has an appearance similar to that of the lean of the chunk meat.

The lean-like portion preferably contains the protein food material, and contains oil and/or fat, a binder, and other additives as necessary.

The details of the oil and/or fat, the binder, and the other additives are as described above, and the description thereof will be omitted here.

The lean-like portion may be colored red using a colorant.

The colorant used for the coloration of the lean-like portion is preferably an edible red colorant. From the viewpoint that the lean-like portion exhibits a red color before heating cooking and exhibits a color close to brown after the heating cooking, it is preferable that the edible red colorant has a property of fading by heating. Examples of the red colorant include a natural beet red coloring agent, a cochineal coloring agent, and a gardenia red coloring agent, and among these, a natural beet red coloring agent is preferable.

From the viewpoint of improving the taste and texture of the meat substitute, the lean-like portion may contain the protein food material and the oil and/or fat. In a certain aspect, the oil and/or fat contained in the protein food material may be in a form of a capsule-like oil and/or fat. The polysaccharides can function as a binder between the protein food material and the capsule-like oil and/or fat.

Examples of the capsule-like oil and/or fat include microcapsules encapsulating edible oil and/or fat.

Examples of the microcapsule encapsulating edible oil and/or fat include edible oil-encapsulating microcapsules having a core portion containing edible oil and/or fat and a shell portion encapsulating the core portion and containing an edible and ionically cross-linkable polymer cross-linked with a polyvalent cation.

The edible oil and/or fat contained in the core portion is preferably an edible oil and/or fat having a melting point of 30°C or lower, and may be a natural oil, a synthetic oil, or a mixture thereof. The edible oil and/or fat is preferably a saturated fatty acid or an unsaturated fatty acid, more preferably a saturated fatty acid having 12 to 30 carbon atoms or an unsaturated fatty acid having 12 to 30 carbon atoms, and still more preferably an unsaturated fatty acid having 16 to 24 carbon atoms. Examples of the unsaturated fatty acid having a melting point of 30°C or lower include triglycerides of medium-chain fatty acids having 6 to 12 carbon atoms (medium-chain fatty acid triglycerides), such as caproic acid, caprylic acid, capric acid, and lauric acid; vegetable oils such as coconut oil, sesame oil, olive oil, corn oil, rapeseed oil, safflower oil, soybean oil, sunflower oil, nut oil, grapeseed oil, and linseed oil; and Vitamin E.

The core portion may contain water and other components as necessary, in addition to the above-described edible oil and/or fat. Examples of the other components include an amino acid, a stabilizer, an excipient, and a flavoring agent.

It is preferable that the shell portion encapsulates the core portion and contains an edible and ionically cross-linkable polymer cross-linked with a polyvalent cation.

As the edible and ionically cross-linkable polymer cross-linked with a polyvalent cation, a known ionically cross-linkable polymer cross-linkable with a polyvalent cation can be used. The ionically cross-linkable polymer is not particularly limited as long as it can be used in foods, and examples thereof include pectin or a derivative thereof, alginic acid or a salt thereof, gellan gum, carrageenan, polygalacturonic acid, and a mixture thereof.

The shell portion may contain a component other than the ionically cross-linkable polymer, and examples of other components include a thickener of polysaccharides other than carrageenan and pectin, such as gellan gum, and a plasticizer for imparting flexibility in a dry state.

The microcapsule encapsulating the edible oil and/or fat may have a number-average particle diameter of 10 μm or more and 300 μm or less. In addition, a coefficient of variation (CV value) of the above-described number-average particle diameter is also preferably 30% or less.

The edible oil-encapsulating microcapsule can be produced, for example, by a production method including: a step A of obtaining an oil-in-water droplet dispersion liquid using a water phase containing an edible and ionically cross-linkable polymer and a chelate compound of a polyvalent cation and an oil phase containing an edible oil and/or fat having a melting point of 30°C or lower; a step B of mixing the oil-in-water droplet dispersion prepared in the step A with an edible oil and/or fat to obtain an oil-in-water-in-oil droplet dispersion liquid in which oil-in-water droplets are dispersed in the edible fats and oil; and a step C of obtaining a mixed liquid of the oil-in-water-in-oil droplet dispersion liquid prepared in the step B and an edible oil and/or fat containing a pH lowering agent.

(Fat-like portion)

The fat-like portion refers to a portion having an appearance similar to that of the fat of the chunk of meat (generally, a part also referred to as a fat).

The fat-like portion preferably contains oil and/or fat, and a gel as necessary.

- Oil and/or fat -

Examples of the oil and/or fat include a vegetable oil and/or fat, an animal oil and/or fat, and a fatty acid.

Here, the fatty acid is a monovalent carboxylic acid of a long-chain hydrocarbon and is represented by a general formula $C_nH_mCOOH$ (n and m are an integer of 1 or more).

Examples of the vegetable oil and/or fat include rapeseed oil, soybean oil, palm oil, olive oil, coconut oil, rice oil, corn oil, coconut oil, and canola oil. The vegetable oil and/or fat refers to oil and/or fat obtained from a plant.

Examples of the animal oil and/or fat include beef tallow, pork lard, whale oil, and fish oil. The animal oil and/or fat refers to oil and/or fat obtained from an animal.

Examples of the fatty acid include saturated fatty acids such as lauric acid, stearic acid, isostearic acid, palmitic acid, myristic acid, arachidic acid, and behenic acid; and unsaturated fatty acids such as oleic acid, linoleic acid, α-linolenic acid, eicosenoic acid, and erucic acid.

A range of a melting point of the oil and/or fat is not particularly limited, and may be, for example, 300°C or lower.

The melting point of the oil and/or fat is a value measured by a thermal analysis measuring device.

As the thermal analysis measuring device, for example, SSC5000 DSC200 manufactured by Seiko Instruments Inc. can be used.

The measurement of the melting point of the oil and/or fat is performed by adding 3 mg of a sample to the device and measuring the melting point at a temperature rising rate of 3 °C/min.

- Emulsion -

It is also preferable that the oil and/or fat is contained in the fat-like portion in a form of an emulsion.

Here, in the present specification, the "emulsion" refers to a substance which contains oil and/or fat and water and is in an emulsified state such as an oil-in-water type emulsified substance or a water-in-oil type emulsified substance.

Examples of the oil and/or fat contained in the emulsion include the same as those described above.

A content of the oil and/or fat in the emulsion is preferably 5% by mass or more and less than 90% by mass, more preferably 10% by mass or more and 80% by mass or less, and still more preferably 15% by mass or more and 70% by mass or less with respect to the entire emulsion.

The water contained in the emulsion is not particularly limited as long as it is water which can be used in foods.

A content of the water in the emulsion is preferably 10% by mass or more and 95% by mass or less, more preferably 20% by mass or more and 90% by mass or less, and still more preferably 30% by mass or more and 85% by mass or less with respect to the entire emulsion.

The emulsion preferably contains thickening polysaccharides. By containing the thickening polysaccharides, water retention of the emulsion can be improved.

The thickening polysaccharides are not particularly limited, and the above-described thickening polysaccharides can be applied.

A content of the thickening polysaccharides in the emulsion is preferably 0.1% by mass or more and 5% by mass or less, and more preferably 0.5% by mass or more and 3% by mass or less with respect to the entire emulsion.

The emulsion preferably contains a protein. In a case where the emulsion contains a protein, adhesiveness between the lean-like portion and the fat-like portion is increased.

The protein is not particularly limited, and the above-described protein can be applied.

A content of the protein in the emulsion is preferably 0.1% by mass or more and 10% by mass or less, and more preferably 0.5% by mass or more and 5% by mass or less with respect to the entire emulsion.

The emulsion may contain a surfactant.

Examples of the surfactant contained in the emulsion include edible surfactants.

Examples of the edible surfactant include a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, and lecithin.

The glycerin fatty acid ester preferably contains monoglyceride as a main component.

The monoglyceride is preferably a monoesterified product of a saturated or unsaturated fatty acid having 2 or more and 24 or less carbon atoms and glycerin.

Examples of the fatty acid include behenic acid, stearic acid, and palmitic acid.

The glycerin fatty acid ester may contain diglyceride.

The diglyceride is preferably a diesterified product of a saturated or unsaturated fatty acid having 2 or more and 24 or less carbon atoms and glycerin.

The polyglycerin fatty acid ester is preferably an esterified product of a saturated or unsaturated fatty acid having 2 or more and 24 or less carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by further esterifying a hydroxyl group derived from glycerin of monoglyceride using an organic acid.

Examples of the organic acid include citric acid, succinic acid, acetic acid, and lactic acid, and citric acid or succinic acid is preferable and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having 2 or more and 18 or less carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan of Cocos nucifera oil fatty acid.

The propylene glycol fatty acid ester is an esterified product of a fatty acid and propylene glycol.

The fatty acid which is used for the synthesis of the propylene glycol fatty acid ester is preferably a saturated or unsaturated fatty acid having 2 or more and 24 or less carbon atoms.

Specific examples of the propylene glycol fatty acid ester include a propylene glycol palmitic acid ester, a propylene glycol stearic acid ester, and a propylene glycol behenic acid ester.

The sucrose fatty acid ester is an esterified product of sucrose and a fatty acid.

The fatty acid which is used for the synthesis of the sucrose fatty acid ester is preferably a saturated or unsaturated fatty acid having 2 or more and 24 or less carbon atoms.

The sucrose fatty acid ester is preferably an esterified product of one or two or more fatty acids selected from the group consisting of caprylic acid, capric acid, lauric acid, myristic acid, palmitic acid, palmitoleic acid, stearic acid, oleic acid, arachidic acid, and behenic acid, and sucrose.

The polyglycerin condensed ricinoleic acid ester is an esterified product of a polyglycerin fatty acid ester and a ricinoleic acid condensate.

Specific examples of the polyglycerin condensed ricinoleic acid ester include esterified products of a compound described as specific examples of the aforementioned polyglycerin fatty acid ester and a ricinoleic acid condensate.

The lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, it is possible to use an enzymatically degraded lecithin (so-called lysolecithin).

The enzymatically degraded lecithin is a composition containing lysophosphatidylcholine in which one fatty acid of the phosphatidylcholine molecule is lost by an enzyme such as phospholipase. In the present disclosure, the enzymatically degraded lecithin includes so-called hydrogenated and enzymatically degraded lecithin, which has undergone a hydrogenation treatment to convert a bound fatty acid into a saturated fatty acid, thereby having improved oxidation stability.

From the viewpoint of emulsification dispersibility, an HLB value of the surfactant is, for example, preferably 8 or more, more preferably 10 or more, and still more preferably 12 or more.

The upper limit of the HLB value of the emulsifier is not particularly limited, but it is generally 20 or less and preferably 18 or less.

HLB generally means hydrophilic-hydrophobic balance, which is a term used in the field of surfactant. The HLB value is calculated using Kawakami equation shown below. In a case where a commercially available product is used as the surfactant, the commercially available catalog data is preferentially adopted.

$$\text{HLB} = 7 + 11.7\log(\text{Mw}/\text{Mo})$$

Here, Mw represents a formula weight of a hydrophilic group included in the surfactant, and Mo represents a formula weight of a hydrophobic group included in the surfactant.

The hydrophobic group included in the surfactant is an atomic group having low affinity for water. Examples of the hydrophobic group include an alkyl group, an alkenyl group, an alkylsilyl group, and a perfluoroalkyl group. Specifically, the hydrophobic group refers to an alkyl group or an alkenyl group, which is derived from a fatty acid, in a case where the surfactant is "a glycerin fatty acid ester, a polyglycerin fatty acid ester, an organic acid monoglyceride, a sorbitan fatty acid ester, a propylene glycol fatty acid ester, a sucrose fatty acid ester, a polyglycerin condensed ricinoleic acid ester, or lecithin" described above.

The hydrophilic group included in the surfactant is an atomic group having a high affinity for water. Specifically, the hydrophilic group refers to an atomic group other than the hydrophobic group in a structure of the surfactant.

- Gel -

From the viewpoint of maintaining the appearance similar to the chunk of meat and the viewpoint that a texture similar to the chunk of meat is easily obtained, it is preferable that the fat-like portion contains a gel even in a case where a temperature change or the like occurs, so that the oil and/or fat contained in the fat-like portion does not flow out.

In the present disclosure, the gel refers to a gel which contains at least water and exhibits behavior as an elastic solid.

The elasticity refers to a property of an object which has been deformed by receiving an external force and attempts to return to an original shape after the external force is removed.

The gel preferably contains an edible gelling agent.

Examples of the edible gelling agent include thickening polysaccharides.

Specific examples of the thickening polysaccharides include agar, carrageenan (κ-carrageenan, ι-carrageenan), alginic acid, alginate, agarose, furcelleran, gellan gum, gluconodeltalactone, azotobacter vinelandii gum, xanthan gum, pectin, guar gum, locust bean gum, tara gum, cassia gum, glucomannan, tragacanth gum, karaya gum, pullulan, gum arabic, arabinogalactan, dextran, carboxymethylcellulose sodium salt, methyl cellulose, psyllium seed gum, starch, chitin, chitosan, curdlan, tamarind seed gum, soybean polysaccharide, gelatin, psyllium, hydroxypropyl methyl cellulose, hydroxyethyl cellulose, carboxymethyl cellulose, and dextrin.

It is preferable that the gelling agent is used in combination with a gelation promoting agent.

The gelation promoting agent is a compound which promotes gelation by coming into contact with the gelling agent, and the function of the gelation promoting agent is exhibited by a specific combination with the gelling agent.

Preferred combinations of the gelling agent and the gelation promoting agent are as follows.

1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent,

2) A combination of boric acid or a boron compound as the gelation promoting agent, and guar gum, locust bean gum, tara gum, cassia gum, or the like as the gelling agent,

3) A combination of an acid or an alkali as the gelation promoting agent, and alginate, glucomannan, pectin, chitin, chitosan, curdlan, or the like as the gelling agent,

4) Water-soluble polysaccharides which react with the gelling agent to form a gel are used as the gelation promoting agent; specific examples thereof include a combination in which xanthan gum is used as the gelling agent and cassia gum is used as the gelation promoting agent, and a combination in which carrageenan is used as the gelling agent and locust bean gum is used as the gelation promoting agent.

From the viewpoint of obtaining a chunk-like meat substitute having an appearance and a texture similar to those of the livestock meat, the combination of the gelling agent and the gelation promoting agent is preferably the above-described "1) A combination of a polyvalent metal ion (specifically, an alkali metal ion such as potassium or an alkaline earth metal ion such as calcium and magnesium) as the gelation promoting agent, and carrageenan, alginate, gellan gum, azotobacter vinelandii gum, pectin, carboxymethylcellulose sodium salt, or the like as the gelling agent".

- Component aspect contained in fat-like portion -

The fat-like portion is preferably any one of the following component aspects.

(1) The fat-like portion contains oil and/or fat as a main component.
(2) The fat-like portion contains an emulsion as a main component.
(3) The fat-like portion contains oil and/or fat and a gel.

Here, the "main component" means that the corresponding component is contained in an amount of 90% by mass or more with respect to the entire fat-like portion.

(1) Case in which fat-like portion contains oil and/or fat as main component (hereinafter, fat-like portion example (1))

In a case where the fat-like portion is in the "fat-like portion example (1)", a content of the oil and/or fat contained in the fat-like portion is preferably 90% by mass or more, more preferably 92% by mass or more, and still more preferably 95% by mass or more with respect to the entire fat-like portion.

In a case where the fat-like portion is in the "fat-like portion example (1)", the upper limit of the content of the oil and/or fat contained in the fat-like portion may be 99% by mass or less, or 98% by mass or less with respect to the entire fat-like portion, in consideration of the additive and the like contained in the oil and/or fat.

In a case where the fat-like portion is in the "fat-like portion example (1)", from the viewpoint of obtaining chunk-like meat substitute having an appearance similar to that of the livestock meat, it is preferable to use oil and/or fat which is turbid in a case of being solidified.

Specifically, as the oil and/or fat used in the case where the fat-like portion is in the "fat-like portion example (1)", coconut oil, palm oil, shea butter, cocoa butter, or the like is preferable.

(2) Case in which fat-like portion contains emulsion as main component (hereinafter, fat-like portion example (2))

Since the emulsion often exhibits a white color, the fat-like portion is also likely to exhibit a white color by containing the emulsion as a main component. Therefore, by adopting the aspect of the fat-like portion example (2) as the fat-like portion, the fat-like portion has an appearance closer to that of the livestock meat, and thus the fat-like portion is to be a chunk-like meat substitute.

The emulsion may be an oil-in-water type emulsion or a water-in-oil type emulsion.

In a case where the fat-like portion is in the "fat-like portion example (2)", a content of the emulsion is preferably 90% by mass or more, more preferably 92% by mass or more, and still more preferably 95% by mass or more with respect to the entire fat-like portion.

In a case where the fat-like portion is in the "fat-like portion example (2)", the upper limit of the content of the emulsion contained in the fat-like portion may be 99% by mass or less, or 98% by mass or less with respect to the entire fat-like portion, in consideration of the additive and the like.

A content of the oil and/or fat contained in the emulsion is preferably 5% by mass or more and less than 90% by mass, more preferably 10% by mass or more and 80% by mass or less, and still more preferably 15% by mass or more and 70% by mass or less with respect to the entire emulsion.

A content of water contained in the emulsion is preferably 10% by mass or more and 95% by mass or less, more preferably 20% by mass or more and 90% by mass or less, and still more preferably 30% by mass or more and 85% by mass or less with respect to the entire emulsion.

A content of the surfactant contained in the emulsion is preferably 0.01% by mass or more and 5% by mass or less, more preferably 0.05% by mass or more and 4% by mass or less, and still more preferably 0.1% by mass or more and 3% by mass or less with respect to the entire emulsion.

(3) Case in which fat-like portion contains oil and/or fat and gel (hereinafter, fat-like portion example (3))

In a case where the fat-like portion contains the oil and/or fat and the gel, the oil and/or fat contained in the fat-like portion is easily retained by the gel even in a case where a temperature change or the like occurs. Therefore, even in a case where the temperature change occurs, the oil and/or fat is less likely to flow out from the fat-like portion, and the appearance similar to the chunk of meat is more likely to be maintained. In addition, even in a case where the raw chunk-like meat substitute is heated and cooked, the oil and/or fat is easily retained by the gel, and in a case where the raw chunk-like meat substitute is eaten after the cooking, the oil and/or fat contained in the fat-like portion overflows, and the texture similar to the chunk of meat is easily obtained after the cooking.

From the viewpoint that it is difficult for the oil and/or fat to flow out from the fat-like portion, in a case where the fat-like portion is the aspect of the fat-like portion example (3), it is preferable that the oil and/or fat is encapsulated in the gel.

In a case where the oil and/or fat is encapsulated in the gel, the oil and/or fat is preferably present in a state of a granular body containing the oil and/or fat, specifically, in a state close to a spherical state (hereinafter, referred to as "oil droplet") in a large number in the gel.

A particle size of the oil droplet is preferably 20 $\mu$m or more and 500 $\mu$m or less, more preferably 30 $\mu$m or more and 400 $\mu$m or less, and still more preferably 50 $\mu$m or more and 300 $\mu$m or less.

Since the oil and/or fat is encapsulated in the gel, even in a case where the raw chunk-like meat substitute is heated and sterilized after the raw chunk-like meat substitute is formed, it is possible to suppress the oil and/or fat contained in the fat-like portion from being dissolved and flowing down from the fat-like portion. Therefore, even in a case where the raw chunk-like meat substitute is heated and sterilized, the fat-like portion can be maintained, and storage stability of the chunk-like meat substitute can be improved.

The particle size of the oil droplet is measured by observing the fat-like portion with a transmission optical microscope.

As the transmission microscope, it is possible to use, for example, a product name of inverted microscope Axio Observer. Z1 manufactured by Carl Zeiss AG or the like.

Hereinafter, a procedure for measuring the particle size of the oil droplet will be described.

The oil droplets are collected from the fat-like portion by dissolving the gel with 3% sodium carbonate or the like in a state in which the oil and/or fat is solidified at a temperature equal to or lower than the melting point of the oil and/or fat, and the oil droplets are placed in a polystyrene petri dish having a diameter of 60 mm$\varphi$. In this case, the collected oil droplets are not overlapped in a depth direction of the petri dish. The oil droplets collected in the petri dish are observed with a transmission optical microscope, and imaged at an objective magnification of 5 times. 200 or more images of the oil droplets included in the screen obtained by the imaging are selected, and an equivalent circle diameter of each oil droplet (diameter of a true circle corresponding to the area of the images of the oil droplets) is calculated by image processing software (for example, Image J). An arithmetic mean value of the calculated equivalent circle diameters of the respective oil droplets is calculated, and defined as the particle size of the oil droplets.

In a case where the fat-like portion contains the oil and/or fat encapsulated in the gel, it is preferable that transparency of the fat-like portion is improved by heating.

The fat contained in the chunk of meat is in a state close to white in a non-heated state, but the transparency is increased in a case of performing a heat cooking. Therefore, by using the chunk-like meat substitute according to the present embodiment with the configuration, in a case where the raw chunk-like meat substitute is heat-cooked, the chunk-like meat substitute has an appearance close to that of the livestock meat.

Whether or not the transparency of the fat-like portion is improved by the heating is determined by the following procedure.

The transparency of the fat-like portion in the raw chunk-like meat substitute is measured using a color reader CR-10Plus manufactured by Konica Minolta, Inc. at any three points with the points changed, and an arithmetic mean value of the obtained values is defined as a measured value A. The surface of the raw chunk-like meat substitute is heated by placing the surface of the raw chunk-like meat substitute on a hot plate with a temperature of 160°C and allowing the meat substitute to stand for 2 minutes. The heated raw chunk-like meat substitute is taken out from the hot plate, and the transparency of the measurement portion is measured after the heating by the same procedure as the measured value A, and an arithmetic mean value of the obtained values is defined as a measurement B. In a case where the measured value B shows a result of a higher transparency than the measured value A, it is determined that the fat-like portion is heated with improved transparency.

In a case where the fat-like portion is in the "fat-like portion example (3)", a content of the oil and/or fat is preferably 10% by mass or more and 70% by mass or less, more preferably 15% by mass or more and 60%

by mass or less, and still more preferably 20% by mass or more and 50% by mass or less with respect to the entire fat-like portion.

In a case where the fat-like portion is in the "fat-like portion example (3)", a content of the gel is preferably 30% by mass or more and 90% by mass or less, more preferably 40% by mass or more and 85% by mass or less, and still more preferably 50% by mass or more and 80% by mass or less with respect to the entire fat-like portion.

In a case where the fat-like portion is in the "fat-like portion example (3)", the fat-like portion may be in a form of containing a fat mass composition containing a granular body containing oil and/or fat, and an edible and ionically cross-linkable polymer cross-linked with a cation.

The fat mass composition preferably contains an edible and ionically cross-linkable polymer cross-linked with a cation. Here, the "edible" means having a property which does not adversely affect a health condition in a case where a substance is orally subjected to dietary intake by a human.

The "ionically cross-linkable polymer" means a polymer which is cross-linked by a reaction with an ion.

Examples of the edible and ionically cross-linkable polymer include alginic acid, carrageenan, LM pectin, HM pectin, and LA gellan gum.

From the viewpoint of improving heat resistance of the fat mass composition, the edible and ionically cross-linkable polymer is preferably at least one selected from the group consisting of alginic acid, LM pectin, and LA gellan gum.

The cation is preferably a metal ion having an ion valence of 2 or more.

Examples of the metal ion include divalent metal ions such as a calcium ion, a magnesium ion, an iron ion (II), a copper ion (II), a zinc ion, and a manganese ion; and trivalent metal ions such as an aluminum ion and an iron ion (III).

From the viewpoint of obtaining a stable crosslinking structure, the metal ion is preferably at least one selected from a calcium ion, a magnesium ion, or a zinc ion, and more preferably a calcium ion.

The edible and ionically cross-linkable polymer can be cross-linked, for example, by mixing a solution containing the ionically cross-linkable polymer, a surfactant, and water (ionically cross-linkable polymer solution) with an aqueous solution containing a cation.

The fat mass composition can be produced, for example, according to aspects described in Examples later.

The raw chunk-like meat substitute may contain a granular body containing oil and/or fat inside (oil and/or fat encapsulated in a gel, or a capsule-like oil and/or fat).

Here, the "inside" means that the substance is not present on the surface of the chunk-like meat substitute.

The oil and/or fat is easily retained in the chunk-like meat substitute by containing the oil and/or fat encapsulated in the gel or the capsule-like oil and/or fat inside the raw chunk-like meat substitute. As a result, it is easy to obtain a raw chunk-like meat having a texture closer to the texture of the livestock meat.

In one aspect, the alternative restructured meat according to the present disclosure preferably further contains a fat-mimicking composition, and it is more preferable that the fat-mimicking composition contains granular bodies that contain oil and/or fat having a melting point of 0.1°C or higher, and an edible and ionically cross-linkable polymer that is cross-linked with a cation, and an average particle diameter of the granular bodies is 50 $\mu$m or more and 500 $\mu$m or less.

Here, as the oil and/or fat contained in the fat mass composition, the same oil and/or fat as those described above can be used.

An average particle diameter of the granular bodies may be 50 $\mu$m or more and 500 $\mu$m or less.

The average particle diameter of the granular bodies is a value measured by observing the fat mass composition with a transmission optical microscope.

The granular body containing oil and/or fat preferably contains water and other additives as necessary.

From the viewpoint of increasing the release amount of the oily component in a case where the fat mass composition is chewed, the oil and/or fat contained in the granular body is preferably the oil and/or fat is at least one selected from coconut oil, olive oil, palm oil, canola oil, or oleic acid.

A melting point of the oil and/or fat contained in the granular body is preferably equal to or higher than 0.1°C, more preferably 1°C to 30°C, still more preferably 2°C to 25°C, and particularly preferably 5°C to 25°C.

In a case of setting the melting point of the oil and/or fat to 1°C or higher, the granular body is more easily formed in a case of producing the fat mass composition. In addition, by setting the melting point of the oil and/or fat to 1°C or higher, the structure of the fat mass composition is similar to a structure of fatty meat contained in the livestock meat. As a result, similarly to a case of the fatty meat of the livestock meat during chewing, the oily component is easily released from the fat mass composition.

In addition, in a case of setting the melting point of the oil and/or fat to 30°C or lower, it is easy to produce the fat mass composition containing water in the granular body at room temperature (for example, 25°C), and the production step is likely to be simple.

The melting point of the oil and/or fat is measured in accordance with "Standard Methods for the Analysis of Fats, Oils, and Related Materials 2.2.4.2 (1996), 1996 edition", enacted by the Japan Oil Chemists' Society"

<Method for manufacturing alternative restructured meat>

A method for manufacturing the alternative restructured meat according to the present disclosure is not particularly limited as long as the method is a method for manufacturing the alternative restructured meat using the above-described protein food material.

Examples of an aspect of the method for manufacturing the alternative restructured meat according to the present disclosure include a method including forming a lean-like portion having a red color using the above-described protein food material and forming a groove on a surface of the formed lean-like portion, or forming a groove on a surface of a lean-like portion while forming the lean-like portion having a red color (lean-like portion-forming step); and then forming a fat-like portion by adhering oil and/or fat to the groove (fat-like portion-forming step).

In addition, examples of another aspect of the method for manufacturing the alternative restructured meat according to the present disclosure include a method including a first step of mixing the protein food material with a binder (for example, polysaccharides) to obtain a mixture; and

a second step of stretching the mixture to obtain a stretched mixture in which a fiber direction of the protein food material is aligned in one direction.

In the above-described first step, a method of mixing the protein food material with the binder is not particularly limited, and examples thereof include a method of mixing by hand and a method of using a known mixing machine. Examples of the mixing machine include a mixer.

It is preferable to crush the protein food material with hands or the like to adjust the size of the protein food material before mixing the protein food material with the binder.

In addition, in a case where the alternative restructured meat to be manufactured contains oil and/or fat, the above-described fat mass composition, or other additives, it is preferable that the component is mixed with the protein food material and the binder in the first step.

In the above-described second step described above, a method of stretching the mixture obtained in the first step (hereinafter, also referred to as "first-step mixture") is not particularly limited as long as the stretched mixture in which the fiber direction of the protein food material is aligned in one direction is obtained.

It is preferable that the method further includes, after the second step, a third step of forming the stretched mixture to obtain a formed body, and then heating the formed product to harden the formed product.

By heating the formed body, for example, in a case of containing thermally irreversible gel-forming polysaccharides as the binding agent, formation of a gel containing the thermally irreversible gel-forming polysaccharides is promoted. As a result, the formed body is hardened, and the shape of the alternative restructured meat is more easily maintained.

The third step may include a step of, after obtaining the formed body by forming the stretched mixture, forming a pattern similar to fat (marbling pattern) on the surface of the formed body, for the purpose of making the appearance of the alternative restructured meat (specifically, the chunk-like meat substitute) closer to the appearance of the livestock meat (hereinafter, also referred to as a fat-like portion-forming step).

The fat-like portion-forming step is preferably a step of forming, on the surface of the formed body, a groove having, for example, a depth of 100 $\mu$m or more and adhering oil and/or fat to the formed groove to form a fat-like portion.

Examples of a method of forming the groove on the surface of the formed body include a method of digging the surface with a blade and a method of forming the groove using a mold, and a method of forming the groove using a mold is preferable.

Subsequently, the oil and/or fat is adhered to the groove formed on the surface of the formed body to fill the groove, thereby forming a pattern similar to the fat.

In a case where the oil and/or fat is adhered to the groove formed on the surface of the formed body, a property of the oil and/or fat may be any of a liquid state, a semi-solid state in which a liquid and a solid are mixed, or a solid state, but is preferably a liquid state or a semi-solid state.

In a case where the oil and/or fat is adhered to the groove formed on the surface of the formed body, the oil and/or fat may be adhered in a state of an emulsion.

In a case where the oil and/or fat is adhered in a state of an emulsion, it is preferable that an emulsion containing a gelling agent, the oil and/or fat, and water (referred to as "emulsifier for gelling") is adhered to the groove formed on the surface of the formed body, and then the emulsion for gelling, adhered to the groove, is gelled.

The emulsion for gelling is preferably an oil-in-water type emulsion.

An oil droplet size of the oil and/or fat in the emulsion for gelling is preferably 20 $\mu$m or more and 500 $\mu$m or less, more preferably 30 $\mu$m or more and 400 $\mu$m or less, and still more preferably 50 $\mu$m or more and 300 $\mu$m or less.

Examples of a method of gelating the emulsion for gelling adhering to the groove include a method of gelating the formed body to which the emulsion for gelling adheres in an aqueous solution containing a gelation promoting agent.

Examples

Examples will be described below, but the present disclosure is not limited to these examples.

[Examples 1 to 11]

1. Production of protein food material

Defatted soybean flour (SHOWA FRESH RF, manufactured by Showa Sangyo Co., Ltd.; in Table 1 described as defatted soybean protein) as a vegetable protein and wheat gluten (PRO-GLU 65, manufactured by THE TORIGOE Co., Ltd.) as a protein were mixed in an amount (mass ratio) shown in Table 1 to obtain a mixed powder 1.

The defatted soybean flour used contained 54.7% by mass of protein.

Next, a two-axis extruder (biaxial extruder, manufactured by kohwakougyou inc., product name: KEI-45-25) was prepared. The biaxial extruder had a cross section schematically shown in FIG. 2. The shape of the jetting die is cylindrical.

At a jetting part of the two-axis extruder which had been set so that the screw length was 1,100 mm and the maximum temperature of the screw tip part was 160°C, a cylindrical jetting die (lip clearance: 3 mm) having a length of 455 mm in the extrusion direction was attached. The mixed powder 1 was introduced into the above-described two-axis extruder at 500 g/min, and kneaded by pressurizing and heating the protein-containing mixture such that the temperature of the protein-containing mixture in the outlet portion of the extruder is the temperature shown in Table 1 while adding water with a mass ratio shown in Table 1 to the extruder, and the mixture was jetted from an outlet of the jetting die at a jetting amount of 43 kg/hr at a screw rotation speed of 250 revolutions per minute (rpm).

As a result, the protein food material of Example 1 was obtained.

The compositions of the protein-containing mixtures of Examples 2 to 11, and the conditions set in the extrusion portion and the jetting die comprised in the biaxial extruder are as shown in Tables 1 and 2.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Composition*) | Defatted soybean flour | 48.6 | 48.6 | 48.6 | 45.6 | 48.6 | 48.6 | 48.6 | 48.6 | 48.6 | 48.6 | 48.6 |
| | Wheat gluten | 20.8 | 20.8 | 20.8 | 19.5 | 20.8 | 20.8 | 20.8 | 20.8 | 20.8 | 20.8 | 20.8 |
| | Colorant | 0.35 | 0.35 | 0.35 | 0.33 | 0.35 | 0.35 | 0.35 | 0.35 | 0.35 | 0.35 | 0.35 |
| | Moisture | 30.5 | 30.5 | 30.5 | 34.9 | 30.5 | 30.5 | 30.5 | 30.5 | 30.5 | 30.5 | 30.5 |
| Extrusion portion | Temperature of protein mixture of outlet portion (°C) | 162 | 162 | 161 | 159 | 156 | 155 | 161 | 152 | 158 | 158 | 158 |
| | Length of die (mm) | 455 | 355 | 255 | 255 | 355 | 355 | 355 | 255 | 255 | 255 | 255 |
| | Clearance of die (mm) | 3 | 3 | 3 | 3 | 4 | 4 | 4 | 4 | 6 | 4 | 5 |
| | Length clearance of die | 152 | 118 | 85 | 85 | 89 | 89 | 89 | 64 | 43 | 64 | 51 |
| Jetting die | Temperature of mouthpiece of outlet of jetting die (°C) | 112 | 109 | 119 | 116 | 104 | 105 | 102 | 113 | 113 | 110 | 112 |
| | Temperature of "protein mixture" of outlet portion of jetting die (°C) | 112 | 109 | 119 | 116 | 104 | 105 | 102 | 113 | 113 | 110 | 112 |
| | Temperature lowering rate of "protein mixture" from outlet of extrusion portion to outlet of jetting die (°C·mm) | 0.11 | 0.15 | 0.16 | 0.17 | 0.15 | 0.14 | 0.17 | 0.15 | 0.18 | 0.19 | 0.18 |
| | Position of expansion point (distance from outlet of jetting die) mm | 245 | 145 | 105 | 75 | 125 | 145 | 100 | 120 | 50 | 30 | 40 |
| | Temperature of "protein mixture" to expansion start point | 129 | 131 | 132 | 126 | 124 | 128 | 121 | 124 | 122 | 135 | 133 |

*) Charged amount into extruder (mass ratio)

28

[Table 2]

EP 4 785 805 A1

29

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Composition*1 | | Defatted soybean flour | - | 48.6 | 48.6 | 48.6 | 48.6 | 48.6 | 48.6 |
| | | Wheat gluten | - | 20.8 | 20.8 | 20.8 | 20.8 | 20.8 | 20.8 |
| | | Colorant | - | 0.35 | 0.35 | 0.35 | 0.35 | 0.35 | 0.35 |
| | | Moisture | - | 30.5 | 30.5 | 30.5 | 30.5 | 30.5 | 30.5 |
| Extrusion portion | | Temperature of protein mixture of outlet portion (°C) | - | 160 | 160 | 159 | 159 | 159 | 155 |
| Jetting die | | Length of die (mm) | - | 45 | 45 | 45 | 100 | 75 | 30 |
| | | Clearance of die (mm) | - | 4 | 4 | 4 | 3 | 3 | 3 |
| | | Length/clearance of die | - | 11 | 11 | 11 | 33 | 25 | 10 |
| | | Temperature of mouthpiece of outlet of jetting die (°C) | - | 142 | 145 | 145 | 133 | 140 | 146 |
| | | Temperature of "protein mixture" of outlet portion of jetting die (°C) | - | 142 | 145 | 145 | 133 | 140 | 146 |
| | | Temperature lowering rate of "protein mixture" from outlet of extrusion portion to outlet of jetting die (°C/mm) | - | 0.40 | 0.33 | 0.31 | 0.26 | 0.25 | 0.30 |
| | | Position of expansion point (distance from outlet of jetting die) mm | - | 0 | 0 | 0 | 0 | 0 | 0 |
| | | Temperature of "protein mixture" to expansion start point | - | 142 | 145 | 145 | 133 | 140 | 146 |

*1 Charged amount into extruder (mass ratio)

2. Production of alternative restructured meat

Using the protein food material obtained above, the following first to third steps were performed to produce the alternative restructured meats of Examples 1 to 11.

(First step)

The protein food material was boiled in 3 liters (L) of boiling water for 10 minutes, and then drained. The protein food material from which the water had been removed was cut to a length of approximately 100 mm, and torn along the fiber direction to have a width of approximately 5 mm.

The torn protein food material was boiled for 10 minutes in an aqueous solution containing SUNGRILL BEEF TASTE 3457E (a seasoning not using an animal material, manufactured by San-Ei Gen F.F.I., Inc.) as a seasoning (concentration: 5% by mass of the seasoning with respect to the entire aqueous solution), thereby obtaining a striped protein food material.

The striped fibrous bundle-like organized protein 1was immersed in an aqueous solution containing SANBEAT CONC No. 4948 (a colorant manufactured by San-Ei Gen F.F.I., Inc.) as a colorant (concentration: 3% by mass of the colorant with respect to the entire aqueous solution), thereby obtaining a striped protein food material.

Thereafter, 7.5 g of GENUTINE 310-C (carrageenan manufactured by Sansho Co., Ltd.) containing thermally reversible gel-forming polysaccharides and 7.5 g of Konbusan 429S (a hardening agent-containing sodium alginate manufactured by KIMICA Corporation) containing thermally irreversible gel-forming polysaccharides as binders and 30 g of water were added to 150 g of the striped protein food material, and the mixture was uniformly mixed to obtain a first-step mixture.

(Production of fat mass composition)

(1) Liquid droplet-forming step

A water phase and an oil phase were prepared as follows.

Water phase: 99.5 parts by mass of tap water and 0.5 parts by mass of RYOTO Sugar Ester M-1695 (manufactured by Mitsubishi Chemical Corporation) as a surfactant were weighed so that the total thereof was 5 kg, and the resultant mixture was stirred for 30 minutes with Three-One Motor (manufactured by Shinto Scientific Co., Ltd.) and completely dissolved.

Oil phase: 1 kg of coconut oil (manufactured by COCOWELL CORPORATION, product name: Organic Premium Coconut Oil (M041)) was weighed as oil and/or fat.

A membrane emulsification was carried out using a pipe-shaped SPG membrane (manufactured by SPG Technology Co., Ltd., pore diameter: 50 $\mu$m) with the water phase as a continuous phase and the oil phase as a dispersed phase. Specifically, a pipe-shaped SPG membrane was inserted and disposed in a tubular container, and then, the water phase was allowed to flow into the inside (the internal pipe line) of the pipe-shaped SPG membrane at a flow rate of 50 mL/min from one end of the container toward the other end of thereof, and the oil phase was allowed to flow to the outside (the outer pipe line (a flow channel between the container and the SPG membrane)) of the pipe-shaped SPG membrane at a flow rate of 10 mL/min.

As a result, an aqueous solution containing liquid droplets containing the oil and/or fat (hereinafter, also referred to as a liquid droplet dispersion liquid) was obtained.

A particle size of the liquid droplets containing the oil and/or fat (granular body containing oil and/or fat) was 190 $\mu$m, and a CV value thereof was 19%.

Here, the particle size and the CV value of the liquid droplets containing the oil and/or fat were measured by a transmission optical microscope.

The liquid droplet dispersion liquid recovered to a petri dish was observed using a transmission optical microscope and imaged at an objective magnification of 5 times. 200 or more images of the liquid droplets containing the oil and/or fat, included in the screen obtained by the imaging, were selected, and an equivalent circle diameter of each liquid droplet (diameter of a true circle corresponding to the area of the images of the liquid droplets) was calculated by image processing software (for example, Image J). An arithmetic mean value of the calculated equivalent circle diameters of the respective liquid droplets was calculated, and defined as "average particle diameter of the liquid droplets containing the oil and/or fat".

The CV value of the liquid droplets containing the oil and/or fat is a value obtained by the following expression.

CV value (%) of liquid droplets containing oil and/or fat = (Standard deviation of equivalent circle diameters of liquid droplets containing oil and/or fat/Average particle diameter of liquid droplets containing oil and/or fat) $\times$ 100

In addition, the standard deviation of the equivalent circle diameters of the liquid droplets containing the oil and/or fat is a standard deviation of equivalent circle diameters of 200 liquid droplets containing the oil and/or fat, calculated in the measurement of the average particle diameter of the liquid droplets containing the oil and/or fat.

(2) Oil and/or fat solidification step

The liquid droplet dispersion liquid was added to a separatory funnel and then allowed to stand for 30 minutes. Since the liquid droplet dispersion liquid was separated into a phase containing liquid droplets containing the oil and/or fat and a water phase, the water phase was discharged from the separatory funnel, and the phase containing liquid droplets containing the oil and/or fat was recovered.

The recovered phase containing liquid droplets containing the oil and/or fat was allowed to stand for 1 hour in a refrigerator having an internal temperature of 5°C and cooled to solidify the oil and/or fat, thereby obtaining an aqueous solution containing particles (hereinafter, also referred to as a particle-containing liquid).

(3) Cross-linking step

1 part by mass of sodium alginate (manufactured by KIMICA Corporation, KIMICA ALGIN I-1) as an edible and ionically cross-linkable polymer, 0.5 parts by mass of RYOTO Sugar Ester M-1695 (manufactured by Mitsubishi Chemical Corporation) as a surfactant, and 98.5 parts by mass of tap water were mixed to obtain an aqueous solution containing an edible and ionically cross-linkable polymer (hereinafter, also referred to as an ionically cross-linkable polymer solution).

100 parts by mass of the particle-containing liquid was added to 100 parts by mass of the ionically cross-linkable polymer solution, and the mixture was slowly stirred with a stirrer (Three-One Motor, Yamato Scientific co., ltd.) to obtain a solution 1. The obtained solution 1 was poured into a stainless steel tray such that a thickness of the solution was 3 mm.

1 part by mass of calcium chloride (manufactured by FUJIFILM Wako Pure Chemical Corporation, food additive grade) as a salt containing a cation was dissolved in 99 parts by mass of tap water to prepare an aqueous solution 1 containing a cation. The aqueous solution 1 containing a cation, having the same mass of the solution 1 contained in the stainless steel tray, was poured into the stainless steel tray and allowed to stand for 2 hours in a refrigerator having an internal temperature of 5°C, and the edible and ionically cross-linkable polymer was cross-linked (gelated) to obtain a crude fat mass composition.

The crude fat mass composition was washed with tap water, and then wiped with KIMTOWEL (registered trademark, manufactured by NIPPON PAPER CRECIA CO., LTD.) to remove moisture on the surface, and cut into a rod shape having a size of approximately 1 mm × 1 mm × 30 mm. The oil and/or fat adhering to the surface of the cut crude fat mass composition was washed with edible ethanol to obtain a fat mass composition B.

(Second step)

The fat mass composition B was mixed with the mixture obtained in the first step in an amount of 20% by mass of the mass of the mixture, and the mixture was formed into a spherical shape having a diameter of approximately 60 mm, and stretched by hands to obtain a stretched mixture having a stretching ratio of approximately 6 times.

(Third step)

The stretched mixture was cut to have a length equal to a thickness (20 mm) of a steak in a direction orthogonal to the fiber direction of the protein food material contained in the stretched mixture, so that a formed body was obtained by bundling a plurality of cut pieces such that the fiber direction was aligned in the thickness direction of the steak with the shape of the steak. The formed body was vacuum-packed, and then heated for 1 minute such that the temperature inside the formed body reached 75°C. Thereafter, the formed body was rapidly cooled with ice water to obtain a chunk-like alternative restructured meat.

[Comparative Example 1]

As the protein food material of Comparative Example 1, "A-1000" manufactured by Fuji Oil Co., Ltd. was prepared. The alternative restructured meat of Comparative Example 1 was produced in the same manner as in Example 1, except that "A-1000" manufactured by Fuji Oil Co., Ltd. was used.

[Comparative Examples 2 to 7]

The protein food materials of Comparative Examples 2 to 7 were produced in the same manner as in Example 1, except that the composition of the protein-containing mixture and each condition set in the extrusion portion and the jetting die comprised in the biaxial extruder were changed as shown in Table 2.

The alternative of Comparative Examples 2 to 7 were produced in the same manner as in Example 1, except that the obtained protein food material was used.

[Measurement and evaluation]

The protein food materials and the alternative restructured meats obtained in Examples and Comparative Examples were measured and evaluated as follows.

<Multiple accumulated bite measurement>

The multiple accumulated bite measurement was performed using the protein food materials obtained in Examples and Comparative Examples. The results are shown in Table 3.

As the measurement device, a texture property measuring device (product name "Tensipresser MyBoy2", manufactured by Takemoto Denki Co., Ltd.) was used.

As the indenter, a 5 mmφ hollow cylindrical shape (cross-sectional area of 0.041 cm$^2$, length of 9 mm) was used.

The measurement was performed by pressing the indenter perpendicularly into the measurement sample.

In this case, the stress in a case where the indenter is gradually pressed into the measurement sample by repeating an operation of pressing the indenter by 0.350 mm at 2 mm/sec after the indenter comes into contact with the measurement sample and then pulling the indenter out by 0.250 mm at 2 mm/sec was acquired.

The stress curve obtained by the measurement was analyzed by analysis software of the measurement device to obtain Pliability, Brittleness, Tenderness, and Toughness.

Tenderness was obtained as a value [gw/cm$^2$/mm] obtained by dividing the compressive stress [gw/cm$^2$] by the thickness [mm] of the measurement sample.

Toughness was obtained as a value [gw·cm/cm$^2$/mm] obtained by dividing the energy [gw·cm/cm$^2$] applied until the measurement sample was broken by the thickness [mm] of the measurement sample.

The protein food material for producing the measurement sample was used after being immersed in water at 90°C to be sufficiently water-absorbed and then slightly drained.

The thickness of the measurement sample after water absorption in a direction orthogonal to the fiber direction was set to 1.5 mm or more and 8 mm or less.

For the protein food material having a thickness in a direction orthogonal to the fiber direction of more than 8 mm, the measurement sample was produced by cutting out the protein food material using a single-edged razor to form two planes parallel to the fiber direction and parallel to each other, with a distance between the parallel planes being 8 mm or less. The size of the measurement sample may be a size that can be installed in the measurement device.

In a case where the protein food material to be measured is sheet-shaped and a direction along a sheet surface and the fiber direction are parallel to each other, the measurement sample was produced by cutting the protein food material to have a thickness of 1.5 mm or more and 8 mm or less in a direction orthogonal to the sheet surface.

The pressing direction of the indenter in the measurement was set to a direction in which the longitudinal direction of the indenter was perpendicular to the fiber direction of the measurement sample.

In a case where the protein food material to be measured is sheet-shaped and a direction along a sheet surface and the fiber direction are not parallel to each other, and in a case where the protein food material to be measured is non-sheet-shaped (for example, spherical, irregular shape, or the like), the measurement sample was produced by cutting out the protein food material to form two planes parallel to the fiber direction and parallel to each other, with a distance between the parallel planes being 1.5 mm or more and 8 mm or less.

The pressing direction of the indenter in the measurement was set to a direction in which the longitudinal direction of the indenter was perpendicular to the fiber direction of the measurement sample.

In a case where the protein food material to be measured does not have a fiber direction, or in a case where the fiber direction cannot be discriminated from the appearance or the cross section of the protein food material and the fiber direction is unknown, the measurement was performed by producing the measurement sample according to the following (A1) or (A2).

(A1) In a case where the protein food material is sheet-shaped, the measurement sample having two planes parallel to the sheet surface was produced by cutting the protein food material to have a thickness of 1.5 mm or more and 8 mm or less in a direction orthogonal to the sheet surface.

The pressing direction of the indenter in the measurement was set to a direction in which the longitudinal direction of the indenter was perpendicular to the two planes of the measurement sample.

(A2) In a case where the protein food material is non-sheet-shaped (for example, spherical, irregular shape, or the like), the protein food material was cut out into a cube (with a side length of 6 mm or more and 8 mm or less) to produce the measurement sample.

The measurement was performed for each of three directions orthogonal to the surfaces facing each other in the cube, and an evaluation value on the surface where Tenderness is at its maximum was adopted.

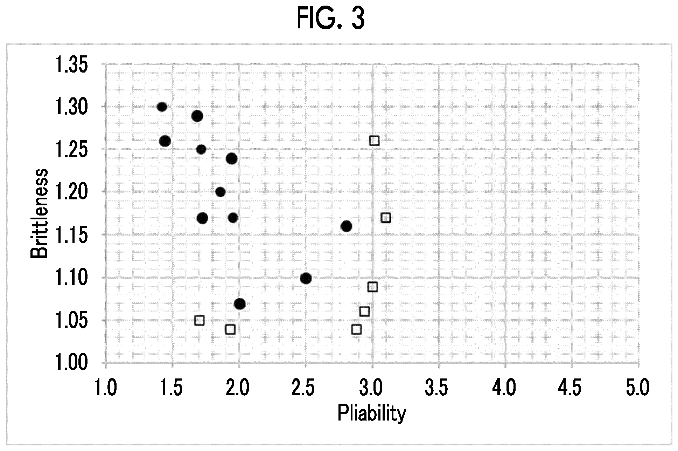

FIG. 3 shows a graph in which Pliability acquired from each of Examples and Comparative Examples is plotted on a horizontal axis and Brittleness is plotted on a vertical axis. The black circle is an example group, and the white square is a comparative example group.

<Measurement and evaluation related to void>

- Formation of cross section -

For each of the protein food materials obtained in Examples and Comparative Examples, a direction along the extrusion direction was determined as the fiber direction.

- Drying treatment -

The protein food materials, in which the fiber direction was determined, were allowed to stand in a vacuum oven (product name: VOS-201SD, manufactured by EYELA) connected to a vacuum pump (product name: GCD-051XF, manufactured by ULVAC, Inc.), and put into a vacuum state by the vacuum pump, followed by drying for 17 hours under conditions of 60°C.

- Measurement of proportion of number of voids -

The protein food materials, in which the fiber direction was determined and subjected to the drying treatment, were cut using a cutting unit in a direction orthogonal to the fiber direction using a single-edged razor blade to form a cut surface, thereby obtaining a measurement sample.

Using an optical microscope (product name: VHX-5000, manufactured by KEYENCE CORPORATION) to which a zoom lens (product name: VH-ZST, manufactured by KEYENCE CORPORATION) was attached, the cut surface (cross section for measurement) formed in the measurement sample was observed with an objective lens (product name: ZS-20, manufactured by KEYENCE CORPORATION) at a lens magnification of 30 times.

The void present in the observed cut surface can be detected using commercially available software (MatLab, version 2018).

After correcting the in-plane unevenness of brightness, the image was binarized based on the brightness to extract the dark portion.

The plurality of extracted dark portion regions were subjected to labeling processing and morphological processing, and the form analysis of each dark portion region was performed. The dark portion region having a predetermined area or less (0.01 mm$^2$ or less) was defined as noise and removed, and further, the void adjacent to the boundary of the image was removed. The size of the void was detected, and the cross-sectional area (mm$^2$) of each void was calculated.

Based on the obtained cross-sectional area, a proportion (%) of the number of voids having a cross-sectional area of 0.1 mm$^2$ or less with respect to the total number of voids present in the cut surface was calculated.

The proportion (%) of the number of voids in the protein food material was a value obtained by determining the fiber direction by the above-described method for each of five measurement samples, which were prepared from the protein food material to be measured, performing the above-described measurement for each measurement sample, calculating the proportions (%) of the number of voids, and arithmetically averaging the obtained five number proportions (%). The results are shown in Table 3.

- Calculation of average value of aspect ratios of void -

The protein food material that had been stored frozen at -20°C was allowed to stand in an environment of room temperature (23°C) and relative humidity of 20% RH to be thawed.

After confirming the fiber direction, an X-ray transmission image was acquired under conditions of a radiation source of Cu (40 kV/30 mA), a lens of L4320, and binning of 2 using a three-dimensional X-ray microscope (product name "nano3DX", manufactured by Rigaku Corporation), and then a three-dimensional image was reconstructed.

A cross-sectional image in which a 1.5 cm square area region included in a plane parallel to the fiber direction was enlarged was extracted, and a dark portion surrounded by bright portions was visually detected as a void. Ten voids were randomly selected. In a case where the 10 voids are not present in the cross-sectional image, another cross-sectional image was extracted.

Among the points constituting the outline of the void, two points with the greatest distance between them were selected, a line segment connecting the two points was defined as a major axis, and a length of the line segment was defined as a length of the major axis. A straight line extending infinitely in the length direction at both ends of the major axis was defined as a major axis line. Among straight line groups orthogonal to the major axis line, a straight line group having two or more intersections with the outline of the void was defined as a minor axis line group. Among the minor axis line group, a straight line having the greatest distance between the intersections farthest from each other is selected as a minor axis line. A line segment connecting the intersections of the minor axis line and the two farthest points of the outline of the void was defined as a minor axis, and a length thereof was defined as a length of the minor axis of the void. The aspect ratio of the void was calculated using the following equation. The results are shown in Table 3.

$$\text{Aspect ratio of void} = \text{length of major axis of void} / \text{length of minor axis of void}$$

The aspect ratios for the 10 voids were averaged to obtain an average value.

<Ease of tearing (forming workability)>

The protein food material was immersed in water at 90°C or higher for 30 minutes, the water was drained, and the material was evaluated by tearing the material in the fiber direction with the hand in a state where the internal temperature was 20°C. The results are shown in Table 3.

The ease of tearing was evaluated by five persons. The evaluation points are shown below. The evaluation results were defined as an average of the 5 evaluators and were rounded to the second decimal place. In a case where the fiber direction was unknown, tearing was evaluated in two directions orthogonal to each other, and the higher score was adopted. The best evaluation point is "5 points".

- Evaluation point -

5 points: tearing is possible in one direction for 5 cm or more.
4 points: tearing is possible in one direction for 5 cm or more, but the tearing direction is slightly bent.
3 points: tearing is possible in one direction for 5 cm or more, but the tearing direction is bent in the middle.
2 points: tearing is possible in one direction for a length of less than 5 cm, but the tearing direction is greatly bent after that.
1 point: tearing is not possible in one direction.

<Alignment direction of protein food material>

The integrated alignment degree and the standard deviation of the alignment angle were measured for each of the alternative restructured meats obtained in Examples and Comparative Examples.

The integrated alignment degree and the standard deviation of the alignment angle were measured by the methods described in the above-described sections "= Procedure for measuring integrated alignment degree =" and "= Procedure for measuring standard deviation of alignment angle =".

In a case where the obtained results are an integrated alignment degree of 1.1 or more and a standard deviation of the alignment angle of 20 or less, it was determined that the protein food material contained in the alternative restructured meat was aligned in a predetermined direction.

As a result, it was confirmed that the protein food material contained in the alternative restructured meat of each of Examples had an integrated alignment degree of 1.1 or more and a standard deviation of the alignment angle of 20 or less, and was aligned in a predetermined direction.

<Appearance (fibrous texture of cross section)>

The alternative restructured meat was cut with a knife in parallel to the fiber direction, and was placed such that the fiber direction was vertical. The cross section was observed by five persons. The evaluation points are shown below. The evaluation results were defined as an average of the 5 evaluators and were rounded to the second decimal place. The best evaluation point is "5 points". The results are shown in Table 3.

- Evaluation point -

5 points: a fibrous appearance in the vertical direction can be clearly confirmed over 85% or more of the entire cross section, and a good meatiness is felt.
4 points: a fibrous appearance in the vertical direction can be confirmed over 55% or more and less than 85% of the entire cross section, and a meatiness is felt.
3 points: a fibrous appearance in the vertical direction can be confirmed over 35% or more and less than 55% of the entire cross section, and a meatiness is partially felt.
2 points: a fibrous appearance in the vertical direction can be confirmed in less than 35% of the entire cross section, and it is difficult to feel a meatiness.
1 point: there is no fibrous appearance, and there is no meatiness.

<Texture (bite-off sensation of alternative restructured meat)>

The alternative restructured meat was steamed at an internal temperature of 90°C or higher, and the texture in a case of putting a 1 cm square in the mouth and chewing the square with the teeth in a state where the internal temperature was 50°C was evaluated. The results are shown in Table 3.
The bite-off sensation of the alternative restructured meat was evaluated by five persons. The evaluation points are shown below. The evaluation results were defined as an average of the 5 evaluators and were rounded to the second decimal place. The best evaluation point is "5 points".

- Evaluation point -

5 points: a meat-like biting is felt in a case of chewing the alternative restructured meat, and it is delicious.
4 points: the alternative restructured meat is slightly left over in a case of chewing, but a meat-like biting is felt as a whole, and it is delicious.
3 points: the alternative restructured meat is left over in a case of chewing, but a meat-like biting is felt, and it is delicious.
2 points: a lot of the alternative restructured meats are left over in a case of chewing, and it is difficult to feel a meat-like biting, but it is acceptable.
1 point: there is no meat-like biting in a case of chewing the alternative restructured meat.

<Texture (chewiness of alternative restructured meat)>

The alternative restructured meat was steamed at an internal temperature of 90°C or higher, and the texture in a case of putting a 1 cm square in the mouth and chewing the square with the teeth in a state where the internal temperature was 50°C was evaluated. The results are shown in Table 3.
The chewiness of the alternative restructured meat was evaluated by five persons. The evaluation points are shown below. The evaluation results were defined as an average of the 5 evaluators and were rounded to the second decimal place. The best evaluation point is "5 points".

- Evaluation point -

5 points: a meat-like chewiness is felt in a case of chewing the alternative restructured meat, and it is delicious.
4 points: the alternative restructured meat is slightly soft in a case of chewing, but a meat-like chewiness is felt, and it is delicious.
3 points: the alternative restructured meat is soft in a case of chewing, but a meat-like chewiness is felt, and it is delicious.
2 points: it is difficult to feel a meat-like chewiness in a case of chewing the alternative restructured meat, but it is acceptable.

1 point: there is no meat-like chewiness in a case of chewing the alternative restructured meat.

<Overall evaluation>

The lower score of the bite-off sensation of the alternative restructured meat and the chewiness of the alternative restructured meat was defined as the overall evaluation of the texture. The results are shown in Table 3.

[Table 3]

| | | Evaluation | | | | | | | | | | |
| | | Protein food material | | | | | | Appearance | Texture | | | |
| | Phabraity [-] | Brittleness [-] | Tenderness/thickness [gr cm/mm] | Toughness/thickness [gr cm/mm] | Aspect ratio of void [-] | Proportion of number of voids of cross-sectional area of 0.1 mm² or less [%] | Ease of tearing (forming workability) | Fibrous texture of cross section | Bite-off sensation | Chewiness | Overall evaluation |
|---|---|---|---|---|---|---|---|---|---|---|---|
| Example 1 | 1.42 | 1.30 | 5058 | 801 | 13.6 | 75 | 5.0 | 5.0 | 5.0 | 5.0 | 5.0 |
| Example 2 | 1.71 | 1.25 | 4949 | 678 | 9.8 | 66 | 4.2 | 4.0 | 4.4 | 4.0 | 4.0 |
| Example 3 | 1.86 | 1.20 | 4237 | 595 | 5.7 | 59 | 3.6 | 3.4 | 3.6 | 3.4 | 3.4 |
| Example 4 | 1.95 | 1.17 | 3925 | 573 | 4.3 | 54 | 3.0 | 3.0 | 2.8 | 3.0 | 2.8 |
| Example 5 | 1.44 | 1.26 | 5044 | 775 | 10.0 | 72 | 4.4 | 4.6 | 4.4 | 4.6 | 4.4 |
| Example 6 | 1.68 | 1.29 | 4987 | 695 | 10.5 | 68 | 4.8 | 4.6 | 4.6 | 4.4 | 4.4 |
| Example 7 | 1.72 | 1.17 | 4532 | 656 | 5.2 | 63 | 3.0 | 3.0 | 2.8 | 3.6 | 2.8 |
| Example 8 | 1.94 | 1.24 | 4665 | 577 | 7.3 | 53 | 4.0 | 3.6 | 3.8 | 3.0 | 3.0 |
| Example 9 | 2.80 | 1.16 | 6223 | 402 | 3.7 | 45 | 2.8 | 3.0 | 2.6 | 2.2 | 2.2 |
| Example 10 | 2.00 | 1.07 | 6066 | 531 | 2.0 | 50 | 2.2 | 3.0 | 2.2 | 2.6 | 2.2 |
| Example 11 | 2.50 | 1.10 | 6148 | 458 | 2.6 | 48 | 2.4 | 3.0 | 2.4 | 2.4 | 2.4 |
| Comparative Example 1 | 2.94 | 1.06 | 7824 | 374 | 1.9 | 30 | 1.0 | 1.0 | 1.0 | 1.0 | 1.0 |
| Comparative Example 2 | 3.01 | 1.26 | 7897 | 358 | 1.9 | 30 | 2.0 | 2.6 | 2.0 | 1.0 | 1.0 |
| Comparative Example 3 | 3.10 | 1.17 | 8311 | 349 | 1.9 | 29 | 1.8 | 2.0 | 1.6 | 1.0 | 1.0 |
| Comparative Example 4 | 3.00 | 1.09 | 7762 | 360 | 1.9 | 30 | 1.4 | 1.4 | 1.2 | 1.0 | 1.0 |
| Comparative Example 5 | 1.70 | 1.05 | 1998 | 371 | 1.8 | 40 | 1.0 | 1.0 | 1.0 | 2.0 | 1.0 |
| Comparative Example 6 | 1.93 | 1.04 | 1995 | 361 | 1.8 | 36 | 1.0 | 1.0 | 1.0 | 1.8 | 1.0 |
| Comparative Example 7 | 2.88 | 1.04 | 7651 | 366 | 1.7 | 32 | 1.0 | 1.0 | 1.0 | 1.2 | 1.0 |

As shown in Table 3, it was found that the protein food materials produced in Examples 1 to 11 contained a protein food material that had a fibrous region in at least a part of the protein food material, in which the protein food material had an average value of ratios of a length of a major axis to a length of a minor axis of a void present in a cross section parallel to a fiber direction of 2 or more, and satisfied both of the following (1) and (2) in a multiple accumulated bite measurement, and the ease of tearing (forming workability) was excellent. It was found that the alternative restructured meats of Examples 1 to 11 containing these protein food materials had a fibrous texture that imitated livestock meat and a bite-off sensation and a chewy texture that imitated livestock meat at an excellent level.

$$\text{Pliability} < 2.94 \dots (1)$$

$$\text{Brittleness} > 1.06 \dots (2)$$

(Explanation of References)

    10: biaxial extruder
    12: hopper
    14: extrusion portion
    15: outlet portion of extrusion portion
    16: screw
    18: protein-containing mixture
    20: jetting die
    24: jetting flow passage
    26: outlet (outlet portion of jetting die)
    X: extrusion direction

The entire disclosure of Japanese Patent Application No. 2023-170514, filed September 29, 2023, is incorporated into the present specification by reference.
In a case where all documents, patent applications, and technical standards described in the present specification are specified to be incorporated specifically and individually as cited documents, the documents, patent applications, and technical standards are incorporated herein in the same limited scope as the cited documents.

## Claims

1.   An alternative restructured meat comprising:

    a protein food material that has a fibrous region in at least a part of the protein food material,
    wherein the protein food material has an average value of ratios of a length of a major axis to a length of a minor axis of a void present in a cross section parallel to a fiber direction of 2 or more, and satisfies both of the following (1) and (2) in a multiple accumulated bite measurement,

$$\text{Pliability} < 2.94 \dots (1)$$

$$\text{Brittleness} > 1.06 \dots (2).$$

2.   The alternative restructured meat according to claim 1,
    wherein the protein food material has a porous structure.

3.   The alternative restructured meat according to claim 1 or 2,

    wherein the alternative restructured meat contains the protein food material in which, in a cross section of the protein food material that is parallel to a direction orthogonal to the fiber direction,
    a proportion of the number of voids having a cross-sectional area of 0.1 mm$^2$ or less to a total number of voids present in the cross section is 45% or more.

4. The alternative restructured meat according to claim 1 or 2,
   wherein the protein food material further satisfies the following (3) in the multiple accumulated bite measurement,

$$2000 < \text{Tenderness [gw/cm}^2\text{]/thickness [mm] of measurement sample} < 7500 \ldots (3).$$

5. The alternative restructured meat according to claim 1 or 2,
   wherein the protein food material further satisfies the following (4) in the multiple accumulated bite measurement,

$$375 < \text{Toughness [gw·cm/cm}^2\text{]/thickness [mm] of measurement sample} < 2000 \ldots (4).$$

6. The alternative restructured meat according to claim 1 or 2,
   wherein the protein food material contains a vegetable protein.

7. The alternative restructured meat according to claim 1 or 2,
   wherein the protein food material is aligned in a predetermined direction.

8. The alternative restructured meat according to claim 6,
   wherein the vegetable protein includes at least one selected from the group consisting of defatted soybean protein and wheat gluten.

9. The alternative restructured meat according to claim 8,
   wherein the alternative restructured meat contains the protein food material in which a mass ratio of a content of the defatted soybean protein to a content of the wheat gluten is 1.5 to 4.

10. The alternative restructured meat according to claim 1 or 2,
    wherein the protein food material further includes a colorant.

11. The alternative restructured meat according to claim 1 or 2, further comprising:
    a binder.

12. The alternative restructured meat according to claim 11,
    wherein the binder includes polysaccharides.

13. The alternative restructured meat according to claim 1 or 2, further comprising:
    a fat-mimicking composition.

14. The alternative restructured meat according to claim 13,

    wherein the fat-mimicking composition comprises

    granular bodies that contain oil and/or fat having a melting point of 0.1°C or higher, and
    an edible and ionically cross-linkable polymer that is cross-linked with a cation, and

    an average particle diameter of the granular bodies is 50 $\mu$m or more and 500 $\mu$m or less.

## FIG. 1

## FIG. 2

FIG. 3

# EP 4 785 805 A1

<table>
<tr><td colspan="2" align="center">INTERNATIONAL SEARCH REPORT</td><td>International application No.<br><br>**PCT/JP2024/031595**</td></tr>
</table>

| A. | CLASSIFICATION OF SUBJECT MATTER |
|---|---|

*A23J 3/00*(2006.01)i; *A23J 3/14*(2006.01)i; *A23J 3/16*(2006.01)i; *A23J 3/18*(2006.01)i; *A23J 3/26*(2006.01)i; *A23L 13/00*(2016.01)i
FI:   A23J3/00 502; A23J3/14; A23J3/16 501; A23J3/18 502; A23J3/26 502; A23L13/00 A

According to International Patent Classification (IPC) or to both national classification and IPC

| B. | FIELDS SEARCHED |
|---|---|

Minimum documentation searched (classification system followed by classification symbols)

A23J3/00; A23J3/14; A23J3/16; A23J3/18; A23J3/26; A23L13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023/171303 A1 (FUJIFILM CORPORATION) 14 September 2023 (2023-09-14)<br>claims, paragraphs [0042]-[0054], [0073]-[0076], [0086]-[0140], examples | 1-14 |
| X | WO 2023/171304 A1 (FUJIFILM CORPORATION) 14 September 2023 (2023-09-14)<br>claims, paragraphs [0046], [0047], [0073]-[0083], [0085]-[0151], examples | 1-14 |
| X | WO 2022/215738 A1 (MORINAGA & CO., LTD.) 13 October 2022 (2022-10-13)<br>claims, paragraphs [0044], [0080], examples | 1-14 |
| P, X | JP 7513819 B1 (FUJIFILM CORPORATION) 09 July 2024 (2024-07-09)<br>claims, examples | 1-14 |
| E, X | WO 2024/202702 A1 (FUJIFILM CORPORATION) 03 October 2024 (2024-10-03)<br>claims, examples | 1-14 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
**Information on patent family members**

International application No.

**PCT/JP2024/031595**

| Patent document cited in search report | | | Publication date (day/month/year) | Patent family member(s) | Publication date (day/month/year) |
|---|---|---|---|---|---|
| WO | 2023/171303 | A1 | 14 September 2023 | (Family: none) | |
| WO | 2023/171304 | A1 | 14 September 2023 | (Family: none) | |
| WO | 2022/215738 | A1 | 13 October 2022 | US 2024/0180195 A1 claims, examples<br>JP 2022-160947 A<br>JP 2022-160994 A<br>JP 2023-18092 A | |
| JP | 7513819 | B1 | 09 July 2024 | (Family: none) | |
| WO | 2024/202702 | A1 | 03 October 2024 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60221041 A
- JP S60221041 A
- JP 1023856 A
- JP S6423856 A
- JP 2023170514 A

**Non-patent literature cited in the description**

- **ENOMAE, T.** ; **HAN, Y.-H.** ; **ISOGAI, A.** Nondestructive determination of fiber orientation distribution of paper surface by image analysis. *Nordic Pulp and Paper Research Journal*, 2006, vol. 21 (2), 253-259, http://www.enomae.com/publish/pdf/2006NPPRJ_-FibreOrientation.pdf
- Standard Methods for the Analysis of Fats, Oils, and Related Materials 2.2.4.2 (1996). 1996